# EUROPÄISCHE PATENTSCHRIFT

(11) **EP 3 832 365 B1**
(45) Veröffentlichungstag und Bekanntmachung des Hinweises auf die Patenterteilung: **30.08.2023**
(21) Anmeldenummer: 19306580.2
(22) Anmeldetag: 05.12.2019
(51) Int. Cl.: G02B 6/44

(54) **VERFAHREN ZUR KONTINUIERLICHEN HERSTELLUNG VON IN EINEM PERFORIERTEN METALL-HOHLPROFIL GELAGERTEN OPTISCHEN FASERLEITER-SENSOREN**
METHOD FOR THE CONTINUOUS PRODUCTION OF OPTICAL FIBRE CONDUCTOR SENSORS MOUNTED IN A PERFORATED METAL HOLLOW PROFILE
PROCÉDÉ DE FABRICATION CONTINUE DE CAPTEURS À FIBRES OPTIQUES MONTÉS DANS UN PROFIL CREUX MÉTALLIQUE PERFORÉ

(43) Veröffentlichungstag der Anmeldung: 09.06.2021
(73) Patentinhaber: Nexans, 92400 Courbevoie (FR)
(72) Erfinder: EGERER, Ralf, 30177 HANNOVER (DE); DINKEL, Steven, 30625 HANNOVER (DE); LANGE, Nico, 30161 HANNOVER (DE); PETERSEN, Olaf, 30177 HANNOVER (DE)
(74) Vertreter: Ipsilon

(56) Entgegenhaltungen:
- EP-A1- 0 727 679
- JP-A- H05 157 589
- JP-A- H10 244 384
- US-A- 4 477 147

## Beschreibung

### Gebiet

Die Erfindung betrifft die kontinuierliche Herstellung von optischen Faserleiter-Sensoren mit einer äußeren, von Bohrungen durchbrochenen Umhüllung aus Metall.

### Hintergrund

Faserleiter für die optische Übertragung von Signalen, auch als Lichtwellenleiter oder Lichtleiter bezeichnet, werden je nach Anwendung und Anforderung an die mechanische Stabilität und den Schutz vor Umwelteinflüssen und Wasserstoffdiffusion mit einem Mantel aus Kunststoff und/oder mit einem Metallmantel umhüllt. Fasern in Metallmantel finden bspw. bei Seekabeln Anwendung und sind häufig auch in Erdseilen von Hochspannungsleitungen als Kommunikationskanal geführt. Die mit einem Metallmantel umgebenen Faserleiter werden auch als Fibre in Metal Tube, kurz FIMT bezeichnet.

Glasfasern können auch als Sensoren für unterschiedliche physikalische Größen genutzt werden, z.B. zur Messung von Drücken, Temperaturen, Schwingungen und anderen Messgrößen, bspw. in Brückenbauwerken, Windkraftanlagen oder in Öl- und Erdgasförderanlagen. Auch diese Faserleiter-Sensoren werde zum Schutz vor allem vor mechanischer Beschädigung häufig mit einem Metallmantel umhüllt, wobei wegen der chemischen Beständigkeit insbesondere Metallmäntel aus Edelstahl Verwendung finden. Um eine bessere Übertragung der Messgröße auf die Glasfaser durch den Metallmantel zu ermöglichen können Löcher in den Metallmantel eingebracht werden.

In einem Metallmantel können ein oder mehrere Fasern verlegt sein. Um ein Reißen oder Brechen der Faser durch von Temperaturschwankungen oder mechanische Zugspannungen hervorgerufene Längenänderungen des Metallrohres zu vermeiden kann die Faser mit einer größeren Länge als die des Metallrohres in dem Metallrohr aufgenommen sein.

Bei einem bekannten kontinuierlichen Prozess zur Herstellung von Metallrohren mit darin gelagerten Faserleitern wird ein Faserleiter oder ein Bündel von Faserleitern einem Rohrformprozess zugeführt. In dem Rohrformprozess wird ein Flachband aus einem Metall, z.B. Edelstahl, zu einem in Längsrichtung geschlitzten Rohr geformt, welches den Faserleiter oder das Bündel von Faserleitern ummantelt. Das zu einem Rohr geformte Flachband wird entlang des Schlitzes längsnahtverschweißt. Ein solcher Prozess bzw. eine dazu eingerichtete Vorrichtung ist bspw. in der Druckschrift EP 0 727 679 A1 gezeigt.

Da beim Bohren der Löcher in den Metallmantel der darin geführte Faserleiter beschädigt werden kann, und durch nur eine einzige Beschädigung des Faserleiters beim Bohren die gesamte Produktionslänge unbrauchbar wird werden die Löcher vor dem Einbringen des Faserleiters in den Metallmantel eingebracht. Üblicherweise werden die Löcher bereits vor dem Formen zu dem Metall-Hohlprofil in das Metallband eingebracht, bspw. durch Stanzen, wie bspw. in der Druckschrift JP H05 157589 A gezeigt.

Wenn die Schweißung mittels Lichtbogenverfahren wie bspw. Wolfram-Inertgas-Schweißen (WIG) erfolgt lassen sich Wandstärken kleiner als 0,15 mm nicht prozesssicher schweißen. Die mit dem bekannten Lichtbogenverfahren geschweißten Rohre können zudem eine ausgeprägte Schweißwulst aufweisen, die in das Rohrinnere hineinragt und darin gelagerte Faserleiter der Gefahr einer mechanischen Beschädigung aussetzt. Ferner sind Rohre mit einem Durchmesser von kleiner Ø 4,0 mm mit dem bekannten Verfahren nicht herstellbar. Hierdurch wird die Dimensionierung des den Faserleiter oder das Bündel von Faserleitern umhüllenden Metallrohres nach unten hin begrenzt. Dies führt zu einem größeren Mindestbiegeradius und einem hohen Gewicht.

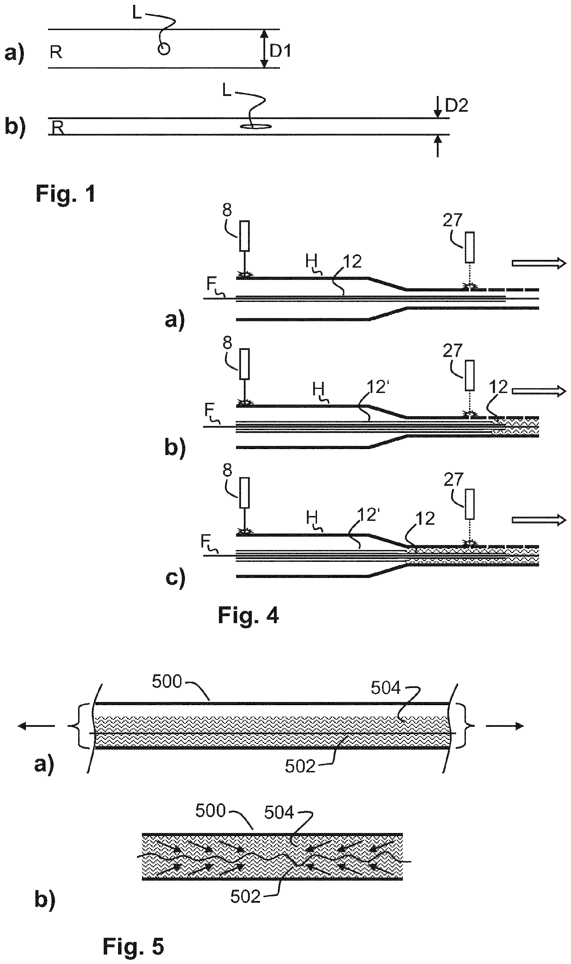

Laserschweißverfahren ermöglichen die kontinuierliche Fertigung von Metallrohren mit Durchmessern bis herunter zu 2 mm mit darin verlegten Faserleitern. Um noch kleinere Durchmesser zu erreichen muss im Anschluss an das Verschweißen des zu einem geschlossenen Metall-Hohlprofils geformten Metallbandes eine Durchmesserverringerung mittels Ziehsteinen, Rollen und anderen Reduzierwerkzeugen vorgenommen werden. All diesen Verfahren zur Reduzierung des Rohrdurchmessers ist gemein, dass eine Druckspannung in Umfangsrichtung zu einem plastischen Materialfluss führt, der ein Verschließen der vorher eingebrachten Lochung bewirkt. Bereits Reduzierungen des Durchmessers von mehr als 20% führen zum vollständigen Verschließen der Löcher. Die Veränderung der Geometrie einer Lochung bei der Reduzierung des Rohrdurchmessers ist in Figur 1 schematisch dargestellt. In Figur 1 a) ist ein mit einem Rundloch L versehenes Segment eines Rohres R mit einem ersten Durchmesser D1 vor der Durchmesserverringerung gezeigt. Nach der Durchmesserverringerung durch einen Ziehprozess ist aufgrund von plastischem Materialfluss das Rohrsegment länger geworden und weist einen kleineren zweiten Durchmesser D2 auf, allerdings ist auch das vormalige Rundloch L zu einer langgestreckten Ellipse verformt.

### Zusammenfassung der Erfindung

Es ist daher eine Aufgabe der vorliegenden Erfindung, ein verbessertes Verfahren und eine entsprechende Vorrichtung zur kontinuierlichen Herstellung von in einem perforierten Metall-Hohlprofil gelagerten Faserleiter-Sensoren vorzuschlagen.

Diese Aufgabe wird durch das Verfahren nach Anspruch 1 und die Vorrichtung nach Anspruch 9 gelöst. Weiterentwicklungen und Ausgestaltungen sind jeweils in den abhängigen Ansprüchen angegeben.

Bei dem erfindungsgemäßen Verfahren zur kontinuierlichen Herstellung eines perforierten Metall-Hohlprofils mit einem oder mehreren darin gelagerten Faserleitern wird zunächst ein flaches Metallband zugeführt, bspw. von einem Coil. Die Breite des zugeführten Metallbandes entspricht vorzugsweise bereits dem Umfang des Metall-Hohlprofils. Falls das zugeführte Metallband breiter ist als es der Umfang des Metall-Hohlprofils erfordert, oder falls die Kanten des Metallbandes nicht hinreichend glatt sind, kann es an einer oder zwei Seiten in einem kontinuierlichen Prozess während des Zuführens maßgerecht beschnitten werden. Der Begriff Metall wird in dieser Beschreibung für alle Arten von Metallen, einschließlich Nichteisenmetalle, und für deren Legierungen verwendet, insbesondere Edelstähle. Die Geschwindigkeit mit der das Metallband zugeführt wird bzw. die pro Zeiteinheit zugeführte Länge können kontinuierlich erfasst werden.

Das in der passenden Breite vorliegende Metallband wird in einem ein- oder mehrstufigen Umformprozess kontinuierlich zu einem Metall-Hohlprofil geformt, welches den gewünschten Querschnitt aufweist. Der Umformprozess kann ein in mehreren Stufen nacheinander folgendes Biegen in Längsrichtung des Bandes umfassen, bspw. an entsprechend eingerichteten Rollen und Profilen. Der Querschnitt kann dabei rund, oval, insbesondere hoch-oval, oder auch beliebig mehreckig sein. Ein hoch-ovaler Querschnitt kann Vorteile beim Schließen des Metall-Hohlprofils aufweisen und kann nach dem Schließen leicht in ein rundes Metall-Hohlprofil umgeformt werden.

Während des Umformprozesses oder im Anschluss daran werden ein oder mehrere einzelne Faserleiter oder ein oder mehrere Bündel von Faserleitern zugeführt, welche in dem Metall-Hohlprofil gelagert werden sollen. Der oder die Faserleiter können mit nichtmetallischen Schichten umhüllt sein. Bei Zuführen mehrerer Faserleiter können Führungsmittel vorgesehen sein, die ein Verdrillen oder Umeinanderschlingen der Faserleiter verhindern. Um eine Beschädigung des Faserleiters oder des Bündels von Faserleitern durch einen Schweißprozess zu verhindern, mit dem das Metall-Hohlprofil radial geschlossen wird, ist der Faserleiter bzw. das Bündel von Faserleitern innerhalb eines Führungs- oder Schutzrohres geführt, das von der Zuführseite kommend innerhalb des Metall-Hohlprofils in Abzugsrichtung gesehen bis hinter die Schweißstelle ragt und den bzw. die Faserleiter erst danach freigibt.

Bei Ausführungen des Verfahrens kann die Länge der pro Zeiteinheit zugeführten Faserleiter kontinuierlich bestimmt werden, bspw. durch eine kontinuierliche Messung der Zuführgeschwindigkeit. Dies kann u.a. zur Bestimmung einer Überlänge des bzw. der in das Metall-Hohlprofil eingebrachten Faserleiter dienen. Die Überlänge des bzw. der Faserleiter kann unterschiedliche Längenausdehnungen des Metall-Hohlprofils und des bzw. der Faserleiter bei Temperaturschwankungen ausgleichen, damit es nicht zu einem Brechen oder Reißen des bzw. der Faserleiter kommt.

Das Metall-Hohlprofil weist nach dem Umformen einen in Längsrichtung verlaufenden Bereich auf, in dem die Kanten des Metallbandes bündig aneinander anliegen. Die bündig aneinander anliegenden Kanten werden entlang der Stoßkante miteinander verschweißt und so radial geschlossen. Das Verschweißen kann bspw. mit einem Laser oder mittels Lichtbogenschweißen erfolgen.

Im Folgenden wird die von dem Laser ausgestrahlte elektromagnetische Strahlung mit dem Begriff "Licht" bezeichnet, auch wenn die Wellenlängen der elektromagnetischen Strahlung in für Menschen nicht sichtbaren Wellenlängenbereichen liegen können.

Beim Laserschweißen bringt der Laser Lichtenergie in einen Punkt in dem Schweißbereich ein, die beim Auftreffen auf die Oberfläche des Schweißgutes absorbiert und in Wärme umgewandelt wird. Um eine ausreichend hohe Energie in das zu verschweißende Material einzubringen muss das Licht stark fokussiert werden. Eine starke Fokussierung ist auch deshalb erforderlich, weil das Verschweißen nur in dem Kontaktbereich der Kanten entlang des Schlitzes erfolgen soll. Die hohe Energiedichte am Auftreffpunkt des Laserstrahls auf das Werkstück bewirkt ein lokales Aufschmelzen des Materials beiderseits der Stoßkante, so dass die Schmelzen ineinanderfließen. Das Material erstarrt wieder, wenn es nicht mehr von dem Laserstahl getroffen wird, und bildet die Schweißnaht. Aufgrund von Wärmeleitung innerhalb des Metalls können unmittelbar an den Auftreffpunkt des Laserstrahls angrenzende Bereiche sich ebenfalls stark erwärmen und ggf. aufschmelzen. Gerade bei kleinen Querschnittsabmessungen der herzustellenden Metall-Hohlprofile, bspw. bei Querschnittsabmessungen kleiner als 4 mm ist die Fokussierung des Laserstrahls daher von großer Bedeutung, um das unkontrollierte Abfließen von verflüssigtem Material bzw. einen Materialabriss zu vermeiden.

Da das Metall-Hohlprofil, in welchem der Faserleiter bzw. die Faserleiter aufgenommen wird, kontinuierlich an dem feststehenden Laser vorbeigeführt wird, wird eine kontinuierliche Schweißnaht erzeugt, welche die beiden Kanten verbindet. Um unkontrolliertes Abfließen des flüssigen Materials zu verhindern, das ja in einer kleinen Wandstärke vorliegt, müssen die eingebrachte Laserleistung und die Geschwindigkeit, mit der das Rohr an dem Laser vorbeigeführt wird, aufeinander abgestimmt sein. Bei geeigneter Abstimmung ergeben sich an der Außen- wie an der Innenseite glatte Schweißnähte, die keiner Nachbearbeitung bedürfen.

Im Gegensatz zu dem bekannten Lichtbogenschweißen nach dem Wolfram-Inertgas-Verfahren (WIG) oder Metall-Inertgas-Verfahren (MIG), die ein Reagieren der Schmelze mit der Umgebungsluft durch die Intergas-Atmosphäre verhindern und dadurch hohe Nahtqualitäten ermöglichen, können bei dem bei der Erfindung genutzten Laserschweißen wegen der besseren Steuerbarkeit des Energieeintrags auch ohne Schutzgase Metalle mit Materialdicken kleiner als 0,15 mm stumpf miteinander so verschweißt werden, dass sich keine Schweißwulst auf der Innenseite des Rohres bildet. Die Schweißstelle kann jedoch auch beim Laserschweißen mit einem inerten Schutzgas, bspw. Argon, umströmt oder abgedeckt werden. Die Nutzung einer Schutzgasatmosphäre kann u.a. von dem zu verschweißenden Material und dessen Stärke abhängig sein. Das Schutzgas kann auf der Innenseite des Metall-Hohlprofils bspw. durch einen Ringspalt in dem Führungs- oder Schutzrohr in den Schweißbereich geführt werden.

Die Verteilung des Energieeintrags durch den Laser kann entweder über die Fokussierung auf ein größeres Zielgebiet erfolgen, so dass eine zur Verfügung stehende Energie je nach Bedarf auf eine größere oder kleinere Fläche wirkt, oder durch geeignetes Hin- und Herbewegen eines besonders eng fokussierten Laserstrahls. Die Fokussierung auf ein größeres Zielgebiet kann auch durch ein Laserprofil gebildet werden, das einen zentralen Fokuspunkt großer Intensität und einen den zentralen Fokuspunkt umgebenden ringförmigen Bereich geringerer Intensität aufweist. Dadurch kann der Schweißbereich entlang eines Temperaturprofils gezielt erhitzt bzw. abgekühlt werden, wodurch sich eine sauberere Schweißnaht ergeben kann, und das Erstarrungsgefüge gezielt beeinflusst werden kann. Außerdem können Laserstrahlen auf einfache Weise gepulst werden, wobei eine Steuerung des Energieeintrags bspw. über die Pulsdauer und den Pulsabstand erfolgt.

Das Schweißen mittels Lasers, insbesondere das Wärmeleitungsschweißen mit einer Leistungsdichte, die nicht zum Verdampfen des Schweißgutes führt, erzeugt eine glatte, abgerundete Schweißnaht, die nicht mehr nachbearbeitet werden muss. Die Energie verteilt sich beim Wärmeleitungsschweißen außerhalb des Bereichs in dem der Laser auftrifft nur durch Wärmeleitung in das Werkstück. In der Regel ist die Nahtbreite größer als die Nahttiefe. Wenn die Wärme nicht schnell genug abfließen kann, steigt die Bearbeitungstemperatur über die Verdampfungstemperatur, so dass Metalldampf entsteht, und die Einschweißtiefe sprunghaft ansteigt. Der Prozess geht dann ins Tiefschweißen über. Dabei wird die Schweißnahtqualität verringert, und die Prozessstabilität wird beeinflusst, sodass das Risiko für Schweißfehler steigt. Es kann sogar zu einer Beschädigung des Führungs- oder Schutzrohres kommen, über das die Fasern in das Rohr eingeführt werden. Dies kann durch entsprechende Steuerung der Laserleistung vermieden werden.

Die aufgrund des fein steuerbaren Energieeintrags in die Schweißstelle hohe Qualität der Schweißnaht an der Außenseite und vor allem an der Innenseite des erfindungsgemäß hergestellten Rohres, die keine ausgeprägte Materialwulst entlang der Schweißnaht aufweist, erlaubt es, Metall-Hohlprofile mit dünnen Wandstärken und kleinen Querschnittsabmessungen in einem kontinuierlichen Prozess zu fertigen.

Nach dem Verschweißen wird das Metall-Hohlprofil aus dem Schweißbereich mittels einer Vorschubeinrichtung abgezogen, beispielsweise mittels eines Spannzangenabzugs, Stollenabzugs, Scheibenabzugs oder Bandabzugs, und einer Bohrvorrichtung zugeführt, welche das Metall-Hohlprofil perforiert, um eine bessere Übertragung der Messgröße auf den oder die Faserleiter zu ermöglichen.

Die Perforierung erfolgt vorzugsweise mittels eines Lasers. Dabei können unterschiedliche Bohrverfahren genutzt werden, bspw. Einzelpuls- oder Perkussionsbohren, Trepanierbohren oder Helixbohren.

Beim Einzelpulsbohren bringt ein kurzer Laserpuls mit hoher Leistungsdichte die Energie in sehr kurzer Zeit in das Werkstück ein, wodurch das Material schmilzt und verdampft. Je größer die Pulsenergie ist, desto mehr Material schmilzt und verdampft. Beim Verdampfen vergrößert sich das Materialvolumen im Bohrloch schlagartig und ein hoher Druck entsteht. Dieser Dampfdruck treibt das aufgeschmolzene Material aus dem Bohrloch.

Beim Perkussionsbohren werden ultrakurze Laserpulse im Nanosekundenbereich oder kürzer verwendet, wodurch das Material durch Sublimation direkt, d.h. ohne Materialaufschmelzung, aus dem festen Zustand verdampft - das Bauteil wird dabei nicht oder nur unerheblich erwärmt. Kürzere Pulslängen im Piko- oder Femtosekundenbereich können die Sublimation begünstigen.

Beim Helixbohren wird ein Laser in einer Ellipsen- oder Kreisbahn über das Material bewegt, welches von den Laserpulsen abgetragen wird. Wie auf einer Wendeltreppe arbeitet sich der Laser in die Tiefe vor, wobei der Fokus nachgeführt werden kann, um immer auf der untersten Ebene zu liegen. Sobald das Material perforiert ist können die Ränder geglättet werden, um ein weitgehend zylindrisches Loch zu erhalten. Beim Helixbohren tritt vergleichsweise viel Material nach oben aus.

Beim Trepanierbohren entsteht die Bohrung ebenfalls durch mehrere Laserpulse. Zunächst wird ein Startloch mittels Perkussionsbohren gebohrt, welches anschließend vergrößert wird, indem der Laser in mehreren, zunehmend größeren Ellipsen- oder Kreisbahnen über das Werkstück fährt. Beim Trepanierbohren kann aufgeschmolzenes Materials nach unten aus dem Bohrloch getrieben werden.

Die Bohrverfahren können auch sequentiell wechselnd genutzt werden, z.B. indem mittels Helixbohren zunächst ein Sackloch gebohrt wird, welches abschließend mittels Perkussionsbohren durchbrochen wird. Auf diese Weise gelangt nur sehr wenig geschmolzenes Material in das Innere des Metall-Hohlprofils.

Bei den vorstehend genannten Bohrverfahren, bei denen mehr als ein Laserpuls verwendet wird, kann der Laser mit einem sich bewegenden Werkstück mitgeführt werden, bspw. mit einem entsprechend eingerichteten Scanner oder durch Mitbewegen der Optik. Die Pulsfrequenz des Lasers und die Vorschubgeschwindigkeit des Werkstücks werden dabei synchronisiert.

Die Form der Bohrung ist dabei in den Grenzen der Abmessungen des Metall-Hohlprofils mehr oder weniger frei wählbar. So können kreisrunde oder ovale Löcher gebohrt, oder Quer- oder Längsschlitze in das Metall-Hohlprofil eingebracht werden.

Um eine Beschädigung des oder der Faserleiter bzw. deren Kunststoffummantelung durch beim Bohren in das Metall-Hohlprofil eindringendes Material oder die zum Bohren verwendete Laserstrahlung zu verhindern wird erfindungsgemäß das Führungs- oder Schutzrohr bis hinter die Bohrstelle geführt, so dass der oder die Faserleiter erst nach der Bohrung frei innerhalb des Metall-Hohlprofils liegen.

Das Material des Führungs- oder Schutzrohrs hat vorzugsweise bezüglich der Wellenlänge des zum Perforieren genutzten Lasers eine geringere Energieabsorption bzw. einen größeren Reflexionsgrad als das Material des Metall-Hohlprofils. Bei einem Metall-Hohlprofil aus Edelstahl kann bspw. ein Laser mit einer Wellenlänge größer als 600 nm zum Bohren der Löcher verwendet werden. Licht dieser Wellenlängen wird von Edelstählen sehr gut absorbiert, von Kupfer und anderen Metallen jedoch stark reflektiert, bzw. nur schlecht absorbiert, so dass Kupfer und andere Metalle als Material für das Führungs- oder Schutzrohr vorteilhaft verwendet werden können. Auf diese Weise kann das Schutzrohr den oder die darin geführten Faserleiter für eine Vielzahl von Bohrungen vor Beschädigungen schützen, bevor das Führungs- oder Schutzrohr selbst durchbohrt wird.

Um einen fälligen Wechsel des Führungs- oder Schutzrohrs während einer laufenden Fertigung weiter hinauszuzögern, der eine Unterbrechung der Fertigung bedeutet, kann das Führungs- oder Schutzrohr zu Beginn eines Fertigungslaufs um eine bestimmte erste Länge über die Bohrstelle hinaus in das Metall-Hohlprofil eingeführt und nach einer festgelegten Anzahl Bohrungen jeweils um eine bestimmte zweite Länge herausgezogen werden. Dadurch trifft der Laserstrahl nicht stets auf dieselbe Stelle des Führungs- oder Schutzrohres auf, und auch beim Bohren in das Innere des Metall-Hohlprofils u.U. eingedrungenes geschmolzenes Material des Metall-Hohlprofils kann sich nicht an einer Stelle ansammeln und zu einem Verschweißen des Metall-Hohlprofils mit dem Führungs- oder Schutzrohr führen. Bei einem radial geschlossenen Führungs- oder Schutzrohr kann dieses vor dem Herausziehen um die bestimmte zweite Länge nach einer festgelegten Anzahl Bohrungen auch um einen festgelegten Winkel um seine Längsachse gedreht werden, so dass sich eine andere Stelle des Führungs- oder Schutzrohres unter einem Bohrloch befindet. Auch eine Kombination der Drehung mit dem Herausziehen ist denkbar. Die zweite Länge ist vorzugsweise erheblich kürzer als die erste Länge, und mindestens so lang wie der Durchmesser der Perforierung.

Das Führungs- oder Schutzrohr kann anstelle eines radial geschlossenen Profils auch eine Rinnenform aufweisen, welche den oder die Faserleiter zu der Bohrseite hin überdeckt. Diese Form ist vor allem dann nutzbar, wenn die Bohrungen nur von einer Seite des Metall-Hohlprofils eingebracht werden. Durch die Rinnenform verringert sich die Fläche des Führungs- oder Schutzrohres, die an der Innenwand des Metall-Hohlprofils reibend anliegen kann, so dass das Einbringen und das Herausziehen vereinfacht sein können.

Bei Ausgestaltungen des Verfahrens werden die Querschnittsabmessungen des Metall-Hohlprofils, also z.B. der Durchmesser, nach dem Verschweißen und vor der Perforierung auf ein gewünschtes Endmaß verringert. Dazu kann das verschweißte Metall-Hohlprofil mittels einer oder mehreren weiteren Vorschubeinrichtungen an Ziehsteinen oder Formprofilen vorbeigeführt werden. Die Reduzierung der Querschnittsabmessungen kann bei Werkstoffen wie z.B. Edelstahl gezielt zu einer Erhöhung der Festigkeit durch Kaltverformung genutzt werden und so auch den Widerstand gegenüber mechanischen Umwelteinflüssen erhöhen. Da die Perforierung erst nach der primären Reduzierung der Querschnittsabmessungen erfolgt werden die Bohrungen nicht oder nur geringfügig verformt.

Bei Ausgestaltungen des Verfahrens können die Querschnittsabmessungen des perforierten Metall-Hohlprofils durch einen dem Perforieren nachgelagerten Ziehprozess noch einmal geringfügig verringert werden. Eine Verringerung um 5-10% kann bspw. zu einer noch akzeptablen Verformung oder Verkleinerung der Bohrungen führen. Auf diese Weise kann zwischen dem Führungs- oder Schutzrohr und dem Metall-Hohlprofil ein größerer Freiraum verbleiben, der Reibung oder das Anhaften verringert bzw. verhindert.

Um ein Anhaften des nach dem Schweißen erhitzten Materials an nachfolgenden Zieh- und Vorschubvorrichtungen zu vermeiden kann das Metall-Hohlprofil mittels einer hinter dem Schweißbereich, vorzugsweise vor einer nachfolgenden Vorschubeinrichtung liegenden Kühlvorrichtung abgekühlt werden. Des Weiteren kann das Schweißgefüge über die Abkühlung gezielt beeinflusst werden.

Zur weiteren Verringerung der Reibung des Führungs- oder Schutzrohres an der Innenseite des Metall-Hohlprofils kann ein in das Metall-Hohlprofil eingebrachtes Füllgel dienen, welches bei Ausgestaltungen des Verfahrens allerdings in erster Linie der Einbettung des Faserleiters oder der Faserleiter in dem Metall-Hohlprofil dient.

Das Füllgel kann über das Führungs- oder Schutzrohr in das Metall-Hohlprofil eingebracht werden, bspw. über einen von der die Fasern freigebende Öffnung abgesetzten Ringspalt des Führungs- oder Schutzrohres, das den oder die Faserleiter umgibt. Das Füllgel kann bei höheren Temperaturen eine niedrigere Viskosität aufweisen als bei niedrigeren Temperaturen. Unter anderem um das Einbringen des Füllgels zu erleichtern kann es daher vor dem Einbringen erwärmt werden, bspw. in einem Vorratstank. Eine Feinregelung der Geltemperatur kann in einem den Vorratstank mit dem Führungs- oder Schutzrohr verbindenden Füllschlauch und/oder in einem Füllkopf erfolgen. Beim Einbringen des Füllgels wird die Durchflussmenge pro Zeiteinheit gemessen und eingestellt, so dass das Füllgel nicht gegen die Fertigungsrichtung rückwärts fließt.

Das Füllgel kann bis hinter die Perforationsstelle innerhalb des Führungs- oder Schutzrohrs geführt sein, oder davor bereits eingefüllt werden, bspw. direkt an der Stelle, an der die Verringerung der Querschnittsabmessungen erfolgt. Bei letzterer Variante wird das die Faserleiter führende Führungs- oder Schutzrohr innerhalb des Teils des Metall-Hohlprofils mit verringerten Querschnittsabmessungen in dem Gel bis hinter die Stelle geführt, an der das Metall-Hohlprofil perforiert wird, was das Herausziehen oder Drehen des Führungs- oder Schutzrohres erleichtern kann.

Um den oder die Faserleiter mit einer definierten Überlänge in das Metall-Hohlprofil einzubringen kann das perforierte Metall-Hohlprofil bei Ausgestaltungen des Verfahrens elastisch gestreckt werden. Dabei werden der oder die Faserleiter ohne Zugspannung in das gestreckte Metall-Hohlprofil eingelegt. Hierbei wird vorzugsweise ein Füllgel in das Metall-Hohlprofil eingebracht, in welches der oder die Faserleiter eingebettet werden. Der Ausdruck Überlänge wird in dieser Beschreibung als das Verhältnis der Länge der Faserleiter zu der Länge des diese umgebenden Metall-Hohlprofils jeweils im ungestreckten, spannungsfreien Zustand verwendet, das definitionsgemäß stets größer als 1 ist. Außerhalb des Metall-Hohlprofils liegende Abschnitte der Faserleiter bleiben dabei unberücksichtigt.

Die elastische Streckung kann bspw. unter Verwendung eines Scheibenabzugs bewirkt werden, der eine Zugkraft in das Metall-Hohlprofil einbringt. Die Zugkraft kann kontinuierlich überwacht werden und kann durch eine entsprechende Ansteuerung des Scheibenantriebs geregelt werden, um eine dauerhafte Längung zu verhindern. Der bzw. die in dem Füllgel innerhalb des Metall-Hohlprofils eingebettete bzw. eingebetteten Faserleiter werden von der Zugkraft nicht gestreckt. Vielmehr muss eine entsprechende zusätzliche Länge des bzw. der Faserleiter so zugeführt werden, dass der bzw. die in das Metall-Hohlprofil eingebrachten Faserleiter während des gesamten Herstellungsprozesses im Wesentlichen frei von Zugspannungen sind. Wegen der temperaturbedingt noch niedrigen Viskosität des Füllgels findet beim elastischen Strecken auch keine nennenswerte Kraftübertragung zwischen der Innenseite des elastisch gedehnten Metall-Hohlprofils und dem Faserleiter bzw. den Faserleitern statt. Die hinter dem Schweißbereich liegende Kühlvorrichtung kann dabei so geregelt sein, dass eine Abkühlung des Metall-Hohlprofils unter eine Temperatur verhindert wird, bei der die Viskosität des Füllgels einen vorgegebenen Wert überschreitet. Das elastisch gestreckte Metall-Hohlprofil kann im gestreckten Zustand mehrfach um den Scheibenabzug geführt sein, so dass das Metall-Hohlprofil und das darin eingebrachte Füllgel weiter abkühlen können, insbesondere auf eine Temperatur, bei der die Viskosität des Füllgels sich stark erhöht hat. Hinter dem Scheibenabzug kann eine weitere Vorschubeinrichtung, z.B. ein Bandabzug, angeordnet sein, die das Metall-Hohlprofil auf der Scheibe hält. Die weitere Vorschubeinrichtung führt das Metall-Hohlprofil von dem Scheibenabzug ungestreckt und im Wesentlichen frei von Zugspannungen einem Aufwickler zu. Im Wesentlichen frei von Zugspannungen ist hierbei so zu verstehen, dass das Metall-Hohlprofil keine oder nur eine vernachlässigbare elastische Streckung erfährt. Die pro Zeiteinheit von dem Scheibenabzug weggeführte Länge des Metall-Hohlprofils wird kontinuierlich bestimmt, bspw. durch eine kontinuierliche Erfassung der Geschwindigkeit.

Durch den Wegfall der Zugspannung hinter dem Scheibenabzug zieht sich das Metall-Hohlprofil wieder elastisch zusammen. Das unter erhöhter Temperatur flüssig eingebrachte Gel ist durch die zwischenzeitlich erfolgte Abkühlung fester geworden und fungiert als eine Art Reibkraftvermittler zwischen Faserleiter und der Innenseite des Metall-Hohlprofils, der die Bewegung des sich zusammenziehenden Metall-Hohlprofils auf den oder die Faserleiter überträgt. Weil das abgekühlte Gel keine vollkommen freie Bewegung der Faser in dem Metall-Hohlprofil zulässt, insbesondere keine einfache Längsverschiebung über längere Abschnitte, wird der bzw. werden die zu jeder Zeit des Herstellprozesses im Wesentlichen spannungsfrei in dem Metallrohr liegenden Faserleiter, die für das im spannungsfreien, ungestreckten Zustand kürzere Metall-Hohlprofil zu lang sind, im Mittel über die gesamte Länge des Metall-Hohlprofils quasi "gestaucht". Die Faser wird dabei nicht tatsächlich gestaucht, sondern wird sich aus ihrer Längsachse heraus wellenförmig im Innern des Metall-Hohlprofils verlagern.

Während des Herstellprozesses wird kontinuierlich die pro Zeiteinheit von dem Scheibenabzug weggeführte Länge des Metall-Hohlprofils und die Länge des pro Zeiteinheit zugeführten Faserleiters bzw. der Faserleiter bestimmt und über einen festgelegten Zeitraum gemittelt, um Regelschwankungen der Antriebssteuerung auszugleichen. Geeignete Zeiträume können im Bereich von Minuten liegen, wobei eine längere Zeitdauer einerseits zu genaueren Ergebnissen führt, andererseits die Zeit bis zu einem eventuell nötigen Regeleingriff entsprechend verlängert. Aus den gemittelten Messwerten wird eine Überlänge des oder der Faserleiter in dem während des Zeitraums gefertigten Metall-Hohlprofils bestimmt. Um Abweichungen von einem Sollwert dynamisch ausregeln zu können wird zusätzlich zur Erfassung der pro Zeiteinheit zugeführten Länge des oder der Faserleiter und der pro Zeiteinheit von dem Scheibenabzug weggeführten Länge des Metall-Hohlprofils kontinuierlich mindestens eine Regelgröße aus der nicht abgeschlossenen ersten Liste beinhaltend Zuführgeschwindigkeit bzw. pro Zeiteinheit zugeführte Länge des Metallbandes, Leistung des Lasers, Temperatur des Füllgels, Durchflussmenge des Füllgels pro Zeiteinheit, Geschwindigkeit des Abziehens des Metall-Hohlprofils aus dem Schweißbereich, auf das Metall-Hohlprofil ausgeübte Zugkraft und Temperatur des Metall-Hohlprofils vor dem Scheibenabzug aufgenommen. Aus der mindestens einen Regelgröße wird mindestens eine Stellgröße zur Steuerung der Leistung des Lasers, zur Regelung der Heizung des Vorratstanks, des Füllkopfes und/oder der Kühlvorrichtung, und/oder zur Steuerung eines Antriebs einer oder mehrerer Vorschubeinrichtungen und/oder des Scheibenabzugs erfasst.

Bei einer oder mehreren Ausgestaltungen des Verfahrens wird die Breite des zugeführten Metallbandes gemessen und eine Schnittbreite in Abhängigkeit von dem Messergebnis und einem Vorgabewert nachgeführt. Die Breite entspricht etwa dem Umfang des den Faserleiter oder das Bündel von Faserleitern umgebenden Metall-Hohlprofils entlang der neutralen Faser. Dabei kann der Vorgabewert variiert und eine Umformvorrichtung entsprechend in Abhängigkeit von der variierenden Breite des Metallbandes angesteuert werden, bspw. um die für eine saubere Schweißnaht erforderliche Materialmenge anzupassen.

Bei einer oder mehreren Ausgestaltungen des Verfahrens wird ein Temperaturprofil quer zu der Schweißnaht gemessen. Das gemessene Temperaturprofil kann dazu genutzt werden, die in den Schweißpunkt eingebrachte Energie zu steuern. Das gemessene Temperaturprofil kann bspw. mit einem Vorgabeprofil verglichen werden, und die Steuerung der eingebrachten Energie kann eine Variation des Fokusdurchmessers, einer von dem Fokuspunkt auf dem Schweißgut beschriebenen Bahnkurve und/oder eine Veränderung der Pulsdauer und/oder des Pulsabstands des Laserstrahls umfassen. Es ist ebenfalls denkbar, die Zuführgeschwindigkeit des Metallbandes in Abhängigkeit von dem gemessenen Temperaturprofil zu regeln. Das gemessene Temperaturprofil kann auch zu Qualitätsmanagements- und Dokumentationszwecken gespeichert werden.

Bei einer oder mehreren Ausgestaltungen des Verfahrens wird dazu die pro Zeiteinheit zugeführte Länge des Metallbandes kontinuierlich gemessen. Aus dem Verhältnis der pro Zeiteinheit abgeführten Länge des verschweißten und reduzierten Metall-Hohlprofils und dem in derselben Zeit zugeführten Länge des Metallbandes können Materialabweichungen des Metallbandes erfasst werden, bspw. unterschiedliche Streckgrenzen, die bei der Regelung des Herstellprozesses unmittelbar berücksichtigt werden können.

Bei einer oder mehreren Ausgestaltungen des Verfahrens wird die Schweißnaht mit Ultraschall, Röntgen, einer Wirbelstrommessung oder anderen zerstörungsfreien Messverfahren überprüft. Die Ergebnisse der Überprüfung können bspw. zur Steuerung der in die Schweißstelle eingebachten Energie und/oder der Zuführgeschwindigkeit genutzt werden.

Eine erfindungsgemäße Vorrichtung zur kontinuierlichen Herstellung eines perforierten Metall-Hohlprofils mit mindestens einem darin gelagerten Faserleiter umfasst eine zum Zuführen eines flachen Bandes des Metalls eingerichtete Zuführeinrichtung. Die Zuführeinrichtung kann bspw. eine Halterung für ein auf einer Spule oder einem Coil aufgewickeltes flaches Metallband umfassen. Das Metallband wird von der Spule oder dem Coil abgewickelt und einem Umformwerkzeug zugeführt, welche das flache Metallband so in das Metall-Hohlprofil umformt, dass die gegenüberliegenden Kanten des flachen Metallbandes bündig stumpf aneinanderstoßen. Die Umformvorrichtung kann bspw. mehrere Rollen und Profile aufweisen, bspw. Ziehsteine, welche das Metallband beim Durchlaufen in Längsrichtung zu dem gewünschten Metall-Hohlprofil umformen. Die Umformvorrichtung kann außerdem zwei oder mehr in Längsrichtung des umgeformten Metallbandes bzw. Metall-Hohlprofils voneinander beabstandete Führungsmittel aufweisen, zwischen welchen die Kanten zumindest an einer zu verschweißenden Stelle bündig aneinander anliegend gehalten werden. Ggf. kann das Band an ein oder mehreren Stellen vor und im Werkzeug seitlich geführt werden um seitliche Bewegung des Bandes zu minimieren.

Die Vorrichtung umfasst ferner eine Schweißvorrichtung, welche die zwischen den Führungsmitteln bündig aneinander liegenden Kanten miteinander verschweißt. Die Schweißvorrichtung kann z.B. einen Laser umfassen, der Licht mit einer Energie ausstrahlt, die ein lokales Schmelzen des Metalls zu beiden Seiten der Kanten bewirkt. Die Schweißvorrichtung kann aber auch eine Lichtbogenschweißvorrichtung umfassen.

Durch das kontinuierliche Abziehen des umgeformten und verschweißten Metall-Hohlprofils gelangen Bereiche aus dem Schweißbereich heraus und das geschmolzene Material erstarrt wieder. Die in das Material zu dessen Erhitzung eingebrachte Energie ist auf das Material, dessen Dicke sowie die Geschwindigkeit abgestimmt, mit der das Metall-Hohlprofil an der Schweißstelle vorbeigeführt wird, so dass das Material in einem unmittelbar an die bündig aneinander liegenden Kanten liegenden Bereich zwar geschmolzen wird, aber kein flüssiges Material in das Innere des Metall-Hohlprofils hineinläuft. Beim Laserschweißen kann über die Führungsmittel der Abstand zwischen einer Optik des Lasers und den zu verschweißenden Kanten des Metall-Hohlprofils konstant gehalten werden. Um die Position der aneinander liegenden Kanten in Bezug auf die Optik des Lasers konstant zu halten kann vor den Führungsmitteln, die den Längsschlitz schließen, ein Führungsschwert in dem zwischen den Kanten liegenden Längsschlitz angeordnet sein, um ein axiales Verdrehen des Metall-Hohlprofils zu verhindern.

Die Vorrichtung umfasst außerdem eine zum Zuführen mindestens eines Faserleiters eingerichtete Zuführeinrichtung. Der oder die Faserleiter, die mit einer nichtmetallischen Schicht umhüllt sein können, werden bspw. von einem oder mehreren Faserabwicklern abgewickelt und über ein von einer Eingangsseite in das Metall-Hohlprofil hineinragendes Führungs- oder Schutzrohr, das erst hinter der Schweißstelle endet, in das verschweißte Metall-Hohlprofil eingebracht. Wenn mehrere Faserleiter zugeführt werden kann die Zuführeinrichtung eine Faserführung aufweisen, mit der die Faserleiter separiert geführt werden und ein Verdrillen oder Verschlingen der Fasern verhindert wird. Alternativ oder zusätzlich kann die Zuführeinrichtung einen oder mehrere sogenannte Faserbinder aufweisen, die mehrere Fasern zu einem Bündel verbinden und mit einem Faden umwickeln. Die Zuführeinrichtung weist außerdem eine Messeinrichtung zur kontinuierlichen, vorzugsweise berührungslosen Messung der pro Zeiteinheit zugeführten Länge des oder der Faserleiter auf.

Die Vorrichtung umfasst zudem eine oder mehrere Vorschubeinrichtungen, welche das verschweißte Metall-Hohlprofil aus dem Schweißbereich abziehen und einer Bohrvorrichtung zuführen, mittels der das Metall-Hohlprofil perforiert wird.

Die Bohrvorrichtung kann insbesondere einen Laser umfassen, der je nach verwendetem Bohrverfahren, Lochgröße und Wanddicke des Metall-Hohlprofils zum Einzelpuls-, Perkussions-, Trepanier-, Helixbohren und/oder anderen Bohrverfahren eingerichtet sein kann. Die Bohrvorrichtung kann beweglich angeordnet sein, um mit der Vorschubgeschwindigkeit des Metall-Hohlprofils mitbewegt zu werden, oder kann eine bewegliche Optik oder einen Scanner zur Ablenkung des Laserstrahls aufweisen, um den Laserstrahl mit der Vorschubgeschwindigkeit des Metall-Hohlprofils mitzubewegen, falls die Bohrung nicht im Einzelpulsbohrverfahren erzeugt wird.

Bei der erfindungsgemäßen Vorrichtung ist das Führungs- oder Schutzrohr über das der oder die Faserleiter in das Metall-Hohlprofil eingebracht werden in Abzugsrichtung des Metall-Hohlprofils bis hinter die Bohrvorrichtung geführt, so dass der oder die Faserleiter erst nach Einbringen der Perforierung frei innerhalb des Metall-Hohlprofils liegen. Dadurch kann eine Beschädigung des oder der Faserleiter bzw. deren Kunststoffummantelung durch beim Bohren in das Metall-Hohlprofil eindringendes Material oder die zum Bohren verwendete Laserstrahlung verhindert werden.

Das Material des Schutzrohrs hat vorzugsweise bezüglich der Wellenlänge des zum Perforieren genutzten Lasers eine geringere Energieabsorption bzw. einen größeren Reflexionsgrad als das Material des Metall-Hohlprofils. Bei einem Metall-Hohlprofil aus Edelstahl kann bspw. ein Laser mit einer Wellenlänge größer als 600 nm zum Bohren der Löcher verwendet werden. Licht dieser Wellenlängen wird von Edelstählen sehr gut absorbiert, von Kupfer und anderen Metallen jedoch stark reflektiert, bzw. nur schlecht absorbiert, so dass Kupfer und andere Metalle als Material für das Schutzrohr vorteilhaft verwendet werden können. Auf diese Weise kann das Schutzrohr den oder die darin geführten Faserleiter für eine Vielzahl von Bohrungen vor Beschädigungen schützen, bevor das Schutzrohr selbst durchbohrt wird.

Um einen fälligen Wechsel des Schutzrohrs während einer laufenden Fertigung weiter hinauszuzögern, der eine Unterbrechung der Fertigung bedeutet, können Ausgestaltungen der erfindungsgemäßen Vorrichtung dazu eingerichtet sein, das Führungs- oder Schutzrohr zu Beginn eines Fertigungslaufs um eine erste Länge über die Bohrstelle hinaus in das Metall-Hohlprofil einzuführen und nach einer festgelegten Anzahl Bohrungen jeweils um eine bestimmte zweite Länge herauszuziehen. Dadurch trifft der Laserstrahl nicht stets auf dieselbe Stelle des Führungs- oder Schutzrohres auf, und auch beim Bohren in das Innere des Metall-Hohlprofils u.U. eingedrungenes geschmolzenes Material des Metall-Hohlprofils kann sich nicht an einer Stelle ansammeln und zu einem Verschweißen des Metall-Hohlprofils mit dem Schutzrohr führen. Wenn ein radial geschlossenes Führungs- oder Schutzrohr verwendet wird kann die erfindungsgemäße Vorrichtung außerdem dazu eingerichtet sein, das Führungs- oder Schutzrohr vor dem Herausziehen um die bestimmte zweite Länge nach einer festgelegten Anzahl Bohrungen auch um einen bestimmten Winkel seine Längsachse zu drehen, so dass sich eine andere Stelle des Führungs- oder Schutzrohres unter einem Bohrloch befindet. Auch eine Kombination der Drehung mit dem Herausziehen ist denkbar.

Bei Ausgestaltungen kann die Vorrichtung dazu eingerichtet sein ein rinnenförmiges Führungs- oder Schutzrohr bis hinter die Bohrstelle in das Metall-Hohlprofil einzuführen.

Bei Ausgestaltungen der Vorrichtung kann zwischen der Schweißvorrichtung und der Bohrvorrichtung eine Vorrichtung zur Verringerung der Querschnittsabmessungen des Metall-Hohlprofils auf ein gewünschtes Endmaß vorgesehen sein, bspw. Rollen, Ziehsteine und/oder Formprofile. Das Metall-Hohlprofil kann der Vorrichtung zur Verringerung der Querschnittsabmessungen mittels einer oder mehreren Vorschubeinrichtungen zugeführt sein, beispielsweise mittels eines oder mehrerer Spannzangenabzüge, Stollenabzüge oder Bandabzüge bekannter Bauart. Unterschiedliche Vorschubeinrichtungen können kombiniert sein. Vor der Vorschubeinrichtung kann bei Ausgestaltungen der Vorrichtung eine Kühlvorrichtung angeordnet sein, die das durch das Schweißen erhitzte Metall-Hohlprofil auf eine Temperatur herunter kühlt, bei der ein Anhaften an nachfolgenden Werkzeugen effektiv vermieden wird und bei der die Werkzeuge keine Abdrücke in dem Metall-Hohlprofil hinterlassen.. Des Weiteren kann das Schweißgefüge über die Abkühlung gezielt beeinflusst werden.

Bei Ausgestaltungen der Vorrichtung kann in Abzugsrichtung hinter der Bohrstelle eine Vorrichtung zur Verringerung der Querschnittsabmessungen des perforierten Metall-Hohlprofils vorgesehen sein. Die Verringerung kann dabei so klein sein, dass die Bohrungen nicht mehr als für einen Anwendungszweck vertretbar verformt oder verkleinert werden.

Die Vorrichtung kann außerdem eine Gelfülleinrichtung umfassen, die ein Füllgel in das Metall-Hohlprofil einbringt, in welchem der oder die Faserleiter gelagert sind. Das Füllgel kann eine mit steigender Temperatur abnehmende Viskosität aufweisen und kann ebenfalls über das Führungs- oder Schutzrohr bzw. über ein dieses koaxial umschließendes Rohr in das Metall-Hohlprofil eingebracht werden. Bei einer Ausgestaltung ist zwischen dem Führungs- oder Schutzrohr und dem das Füllgel führenden Rohr ein Ringspalt zum Einbringen des Füllgels gebildet, der hinter der Schweißstelle liegt, bspw. an der Stelle, an welcher die Querschnittsabmessungen des Metall-Hohlprofils auf das gewünschte Endmaß verringert wird, oder hinter der Bohrstelle. Das Führungs- und Schutzrohr für den oder die Faserleiter kann dabei in dem äußeren Rohr axial verschiebbar sein, welches das Schutzrohr umschließt und über welches das Füllgel eingebracht wird. Die Gelfülleinrichtung kann einen Vorratsbehälter aufweisen und dazu eingerichtet sein, das Füllgel mit einer Temperatur in das Metall-Hohlprofil einzubringen, bei der die Viskosität des Füllgels einen vorbestimmten Wert nicht überschreitet. Dazu können der Vorratsbehälter, ein daran angeschlossener Füllschlauch und/oder ein damit verbundener Füllkopf beheizbar sein, insbesondere gesteuert von einer Temperaturregelungseinrichtung. Die Gelfülleinrichtung kann außerdem dazu eingerichtet sein das pro Zeiteinheit in das Metall-Hohlprofil eingebrachte Volumen des Füllgels kontinuierlich zu erfassen.

Bei Ausgestaltungen kann die Vorrichtung dazu eingerichtet sein, Faserleiter mit einer Überlänge in das Metall-Hohlprofil einzubringen. Dazu kann die Vorrichtung einen hinter der Bohrvorrichtung angeordneten Scheibenabzug umfassen, mittels dessen eine Zugkraft auf das perforierte Metall-Hohlprofil ausgeübt und dieses elastisch streckt. Das elastisch gestreckte Metall-Hohlprofil kann dabei mehrfach um den Scheibenabzug geführt sein. Die von dem Scheibenabzug bereitgestellte Zugkraft kann kontinuierlich mittels einer Kraftmessvorrichtung überwacht und auf einen Sollwert geregelt werden. Alternativ kann der Scheibenabzug mit einer konstanten Geschwindigkeit angetrieben werden, die leicht über der Geschwindigkeit des vorherigen Antriebs liegt und dadurch eine elastische Dehnung des perforierten Metall-Hohlprofils bewirkt. Von dem Scheibenabzug wird das perforierte Metall-Hohlprofil im Wesentlichen spannungsfrei weggeführt, so dass die elastische Streckung aufgehoben ist. Der oder die Faserleiter werden dabei ohne Streckung in das Metall-Hohlprofil eingebracht.

Die Vorrichtung kann außerdem eine dem Scheibenabzug nachgeordnete Messeinrichtung zur vorzugsweise berührungslosen Bestimmung der von dem Scheibenabzug pro Zeiteinheit abgeführten und einem Aufwickler zugeführten Länge des Metall-Hohlprofils umfassen.

Auf den Scheibenabzug folgend kann eine weitere Vorschubeinrichtung angeordnet sein, welche das Metall-Hohlprofil auf dem Scheibenabzug hält, ohne dabei eine nennenswerte elastische Streckung des Metall-Hohlprofils hervorzurufen. Die Messeinrichtung zur Bestimmung der von dem Scheibenabzug pro Zeiteinheit abgeführten und einem Aufwickler zugeführten Länge des Metall-Hohlprofils kann zwischen dem Scheibenabzug und der weiteren Vorschubeinrichtung oder hinter der Vorschubeinrichtung angeordnet sein.

Bei einer oder mehreren Ausgestaltungen der Vorrichtung ist vor der Umformvorrichtung eine Messvorrichtung zur Ermittlung der Zugkraft vorgesehen. Die ermittelte Zugkraft kann einer Regelung als Istwert zugeführt werden und mit einem Sollwert zur Regelung der Antriebe der Vorrichtung eingesetzt werden, etwa um die Geschwindigkeit der Zuführung des Metallbandes zu regeln.

Bei einer oder mehreren Ausgestaltungen umfasst die Vorrichtung außerdem eine vor der Umformeinrichtung angeordnete Schneideeinrichtung, mittels derer eine oder beide Kanten des zugeführten flachen Metallbandes beschnitten werden, wobei die Breite des beschnittenen Metallbandes etwa dem Umfang der neutralen Faser des Metall-Hohlprofils entspricht. Bei diesen Ausgestaltungen können ohne großen Aufwand Metall-Hohlprofile mit unterschiedlichen Umfängen hergestellt werden, indem das zugeführte Metallband auf die erforderliche Breite zugeschnitten und die weiteren Werkzeuge der Vorrichtung angepasst werden.

Bei einer oder mehreren Ausgestaltungen der mit einer Schneideeinrichtung ausgestatteten Vorrichtung ist hinter der Schneideeinrichtung eine Messeinrichtung zur Messung der Breite des zugeschnittenen Metallbandes vorgesehen. Anhand der Messwerte kann die Schneideeinrichtung angesteuert werden, um eine gewünschte Breite des Metallbandes über einen langen Zeitraum einzuhalten. Der Schneideeinrichtung können entsprechende Vorgabewerte zugeführt werden, mit denen die gemessene Breite des Metallbandes verglichen werden um ein Steuersignal für die Einstellung der Schneideeinrichtung zu erzeugen.

An einer oder beiden Kanten des Bandes abgeschnittene Teile können bei einer oder mehreren Ausgestaltungen einer zur Aufnahme von Schnittresten vorgesehenen Vorrichtung zugeführt werden.

Bei einer oder mehreren Ausgestaltungen umfasst die Vorrichtung außerdem eine Messeinrichtung zur Bestimmung eines Temperaturprofils quer und/oder längs zu der Schweißnaht. Das gemessene Temperaturprofil kann der Schweißvorrichtung zur Steuerung der abgegebenen Energie, der Zuführeinrichtung, der Vorschubeinrichtung zur Steuerung der Zuführgeschwindigkeit und/oder der Temperatursteuerung für das Füllgel zugeführt werden.

Bei einer oder mehreren Ausgestaltungen ist die Vorrichtung außerdem dazu eingerichtet, die Schweißstelle innen und/oder außen mit einem Schutzgas abzudecken. Auf der Innenseite kann das Schutzgas bspw. durch ein das Führungs- oder Schutzrohr umhüllendes Rohr eingebracht werden, das mit diesem an der Schweißstelle einen Ringspalt bildet, oder in einem separaten Schutzrohr. Auf der Außenseite kann das Schutzgas an der Schweißstelle oder in deren Nähe zugeführt werden. Um eine längere Bedeckung mit dem Schutzgas zu erreichen kann das verschweißte Metall-Hohlprofil durch einen Rohrabschnitt geführt werden, welcher mit dem Schutzgas geflutet ist.

Bei einer oder mehreren Ausgestaltungen umfasst die Vorrichtung außerdem eine Messeinrichtung zur Messung mindestens einer Abmessung des Metall-Hohlprofils nach dem Verschweißen und/oder nach der Verringerung der Querschnittsabmessungen. Diese Messeinrichtung kann zur integrierten Qualitätskontrolle eingesetzt werden, genauso wie eine bei einer oder mehreren Ausgestaltungen vorgesehene Messeinrichtung zur Prüfung der Schweißnaht und/oder von Materialfehlern bzw. Inhomogenitäten des Materials. Die Abmessungen können vorzugsweise berührungslos gemessen werden, bspw. mittels Laser.

Mit dem vorstehend beschriebenen Verfahren und der Vorrichtung können auf einfache Weise perforierte Metall-Hohlprofile mit Durchmessern bzw. Querschnittsabmessungen bis herunter zu 1 mm auf einem hohen Qualitätsniveau ohne aufwendige Nachbearbeitung hergestellt werden, in die im selben Arbeitsgang ein oder mehrere Faserleiter mit oder ohne Überlänge eingebracht werden. Neben Edelstählen können natürlich auch andere Metalle oder Metalllegierungen für die Metall-Hohlprofile verwendet werden. Auch von runden oder ovalen Querschnitten abweichende perforierte Metall-Hohlprofile sind mit dem erfindungsgemäßen Verfahren herstellbar.

Die im Vergleich zu aus dem Stand der Technik bekannten kleineren Querschnittsabmessungen des perforierten Metall-Hohlprofils mit den darin eingebetteten Faserleitern kann zur Einsparung von Metall und somit zur Schonung wertvoller Ressourcen beitragen. Außerdem werden neben dem Gewicht des Produkts dessen Abmessungen reduziert, so dass eine größere Länge auf dem gleichen Spulentyp aufgewickelt werden kann und der Transport und der Einbau bzw. die Verlegung vereinfacht werden.

Die kontinuierliche Messung der Überlänge ermöglicht es, bereits während des laufenden Herstellprozesses Prozessparameter wie bspw. Temperatur und Menge des pro Zeiteinheit eingebrachten Füllgels, die auf das Metall-Hohlprofil wirkende Zugkraft und somit die elastische Streckung, die Faser-Zuführgeschwindigkeit und die Zuführgeschwindigkeit des zu dem Metall-Hohlprofil umgeformten Metallbandes dynamisch anzupassen, um eine gleichmäßig verteilte Überlänge der Faserleiter zu erzielen. Dabei können auch Abweichungen bzgl. des Materials des Metallbandes erfasst werden, wie bspw. abweichende elastische Streckgrenzen, so dass eine entsprechende Anpassung der Zugkraft beim elastischen Strecken des verschweißten Metall-Hohlprofils oder beim Ziehen zur Verringerung der Abmessungen im laufenden Prozess erfolgen kann.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Darstellung der Veränderung der Geometrie eines vor einer Durchmesserverringerung durch einen Ziehprozess in ein Rohr eingebrachten Rundloches,
- Fig. 2: ein exemplarisches Beispiel des erfindungsgemäßen Verfahrens zur kontinuierlichen Herstellung von in einem perforierten Metall-Hohlprofil gelagerten optischen Faserleiter-Sensoren,
- Fig. 3: ein exemplarisches Beispiel einer erfindungsgemäßen Vorrichtung zur kontinuierlichen Herstellung von in einem perforierten Metall-Hohlprofil gelagerten optischen Faserleiter-Sensoren,
- Fig. 4: unterschiedliche beispielhafte Anordnungen der Führungs- und Schutzrohre bei der Anwendung des erfindungsgemäßen Verfahrens bzw. in einer erfindungsgemäßen Vorrichtung, und
- Fig. 5: eine vereinfachte Darstellung der Lagerung eines Faserleiters in einem Füllgel im Inneren eines elastisch gestreckten und eines längsspannungsfreien Metall-Hohlprofils.

Gleiche oder ähnliche Elemente sind in den Figuren mit gleichen oder ähnlichen Bezugszeichen versehen.

Figur 1 wurde bereits weiter oben mit Bezug auf den Stand der Technik erläutert und wird daher an dieser Stelle nicht erneut erörtert.

### Ausführungsbeispiel

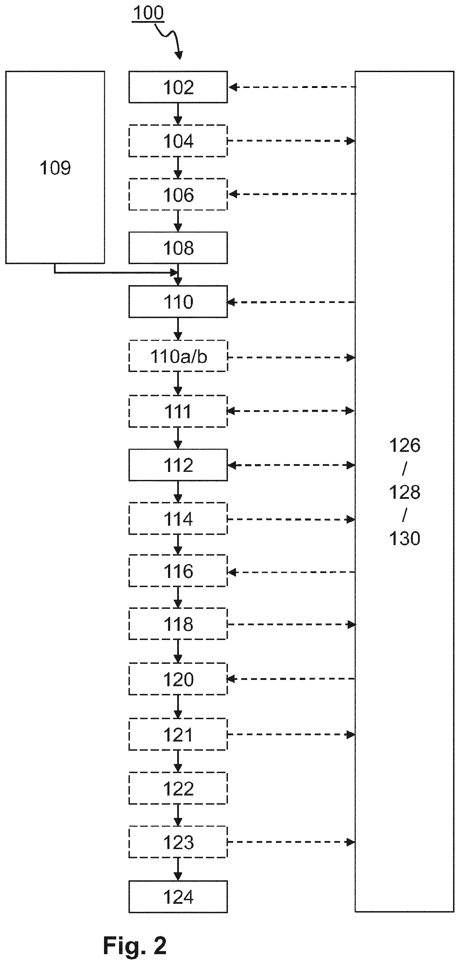

Figur 2 zeigt Schritte eines exemplarischen Verfahrens 100 zur Herstellung eines perforierten Metall-Hohlprofils mit darin gelagerten Faserleitern gemäß einem Aspekt der Erfindung. In Schritt 102 des Verfahrens wird ein flaches Metallband mit einer ersten Zuführgeschwindigkeit einer Umformvorrichtung zugeführt, bspw. von einem Coil abgewickelt. In der Umformvorrichtung wird das zugeführte flache Metallband in Schritt 108 in eine dem gewünschten Metall-Hohlprofil entsprechende Form umgeformt. Das Umformen kann bspw. mittels eines Roll-Formwerkzeugs erfolgen.

Vor dem Umformen kann in einer Schneideinrichtung ein optionaler Schritt 106 ausgeführt werden, in welchem eine oder beide Kanten des Metallbandes beschnitten oder auf andere Weise vorbereitet werden. Hierdurch kann auch bei schlechter Kantenqualität des Metallbandes die Breite des Bandes gleichmäßig und präzise eingestellt und ggf. die Kanten für einen anschließenden Schweißvorgang vorbereitet werden. Der Schneideinrichtung können Messwerte einer Messvorrichtung zugeführt sein, welche die Breite des Metallbandes nach dem Beschneiden erfasst. Die Schnittreste können in einer entsprechenden Aufnahmevorrichtung aufgenommen werden.

Beim Umformen werden die Kanten des Metallbandes mittels Führungselementen so geführt, dass ein Verdrehen vor dem Verschweißen verhindert wird, und die bündig aneinander liegenden Kanten in einer definierten Lage und einem definierten Abstand an einer Schweißvorrichtung vorbeigeführt werden. Die Führungselemente können bspw. ein oder mehrere Finnpassscheiben oder Führungsschwerter sowie ein oder mehrere an die Geometrie des Metall-Hohlprofils angepasste Führungsbuchsen umfassen, welche an die zu fertigende Hohlgeometrie angepasst sind. Das Schließen der Geometrie kann bspw. mittels Ziehsteinen, Schließringen oder Seitenrollenstufen erfolgen.

Nach dem Umformen liegen zwei gegenüberliegende Kanten des flachen Bandes in einem Kontaktbereich bündig aneinander an. In Schritt 110 werden die in dem Kontaktbereich bündig aneinander anliegenden Kanten kontinuierlich miteinander verschweißt. Das Verschweißen erfolgt mittels eines Lasers oder einer anderen an den Werkstoff angepassten Schweißvorrichtung. Ggfs. kann angepasst an die erforderliche Schweißnahtqualität eine ein- oder beidseitige Abdeckung der Schweißnaht mittels Schutzgas erfolgen.

Nach dem Verschweißen wird das Metall-Hohlprofil aus dem Schweißbereich mittels einer Vorschubeinrichtung abgezogen und in Schritt 112 perforiert, bspw. mittels eines Lasers, welcher Löcher in die Wand des Metall-Hohlprofils bohrt.

Zuvor kann das Metall-Hohlprofil in Schritt 111 einer Vorrichtung zur Verringerung der Querschnittsabmessungen auf ein gewünschtes Endmaß zugeführt werden.

Vor dem Verschweißen in Schritt 110 werden einem oder mehreren Faserabwicklern in Schritt 109 ein oder mehrere Faserleiter in das Metall-Hohlprofil eingebracht. Erfindungsgemäß werden der oder die Faserleiter mittels eines Schutz- oder Führungsrohrs unter dem Schweißbereich sowie unter der in Abzugsrichtung hinter dem Schweißbereich liegenden Bohrstelle hindurchgeführt, an welcher das verschweißte Metall-Hohlprofil perforiert wird, so dass die Faserleiter erst in dem bereits verschweißten und perforierten Metall-Hohlprofil aus dem Schutz- oder Führungsrohr austreten.

Zusammen mit dem oder den Faserleitern kann in Schritt 109 ein Füllgel in das Metall-Hohlprofil eingebracht werden, in welchem der oder die Faserleiter eingebettet werden. Das Füllgel kann über das Führungs- oder Schutzrohr in das Metall-Hohlprofil eingebracht werden, bspw. über einen von der die Fasern freigebende Öffnung abgesetzten Ringspalt des Führungs- oder Schutzrohres, das den oder die Faserleiter umgibt. Das Füllgel kann bei höheren Temperaturen eine niedrigere Viskosität aufweisen als bei niedrigeren Temperaturen.

Die Länge des oder der pro Zeiteinheit zugeführten Faserleiter sowie ggf. die eingebrachte Menge Füllgel kann ebenfalls in Schritt 109 kontinuierlich bestimmt werden. Das Füllgel und das Metall-Hohlprofil können in Schritt 116 nach dem Schweißen so temperiert werden, dass die Viskosität des Füllgels einen vorbestimmten Wert nicht überschreitet. Zuvor kann in Schritt 114 die Temperatur gemessen werden. Wenn die Einbettung von Fasern mit einer definierten Überlänge erfolgen soll kann in Schritt 120 das Metall-Hohlprofil elastisch gestreckt werden, bspw. von einer mittels eines Scheibenabzugs auf das Metall-Hohlprofil ausgeübten Kraft. Die Zugkraft kann dabei in Schritt 121 überwacht werden. Das elastisch gestreckte Metall-Hohlprofil kann nun gestreckt abgekühlt werden, Schritt 122, so dass die Viskosität des Füllgels zunimmt, bevor es in Schritt 124 nach Rücknahme bzw. Abbau der elastischen Streckung einer Aufnahmeeinrichtung zur Aufnahme zugeführt wird. Als weiterer Messwert zur Bestimmung der Überlänge in Schritt 126 kann in Schritt 123 die aufgenommene Länge des Metall-Hohlprofils kontinuierlich bestimmt werden. Das Aufnehmen 128 von Regelgrößen an unterschiedlichen Punkten des Verfahrens und die entsprechende Bestimmung 130 von Stellgrößen für Antriebe und Aktoren der Vorrichtung 200 sind in der Figur durch die gestrichelten Pfeile angedeutet. Insbesondere kann durch die Erfassung der zugeführten Längen an Faserleitern und Metallband sowie der Länge des der Aufnahmeeinrichtung zur Aufnahme zugeführten fertigen Produkts eine aktuelle Überlänge ermittelt und durch Steuerung von Prozessparametern wie bspw. Geschwindigkeit der Bandzuführung, Leistung der Schweißvorrichtung, Temperatur und Durchflussmenge des Füllgels, Vorschubgeschwindigkeit nach dem Schweißen, Zugkraft für die elastische Streckung etc. nachgeführt werden.

Zur Überwachung der Qualität der Schweißnaht kann in einem optionalen Schritt 110a das Temperaturprofil quer und/oder längs zur Schweißnaht bestimmt werden. Das ermittelte Temperaturprofil kann einer Steuerung der Schweißvorrichtung und anderer Elemente einer das Verfahren implementierenden Vorrichtung zugeführt werden, insbesondere auch einem oder mehreren Antrieben, welche die Zuführgeschwindigkeit des Metallbandes bzw. die Geschwindigkeit regeln, mit der das verschweißte Metall-Hohlprofil aus dem Schweißbereich abgezogen wird.

Das Verfahren kann optional auch eine Ermittlung der Zugkraft auf das Band vor dem Umformen in Schritt 104 umfassen. Die ermittelte Zugkraft kann ebenfalls den einem oder mehreren Antrieben als Messgröße zur Regelung zugeführt werden.

Das Verfahren kann außerdem einen optionalen Schritt 110b umfassen, in welchem eine oder mehrere Abmessungen des verschweißten Metall-Hohlprofils bestimmt werden. Die ermittelten Abmessungen können vor allem als Eingangsgrößen zur Regelung des Umformvorgangs und des Schneidvorgangs zur Einstellung der Breite des Bandes zugeführt werden.

Das Verfahren kann nach dem Verschweißen außerdem einen optionalen Schritt 118 umfassen, in dem die Qualität der Schweißnaht und/oder das Schweißgut zerstörungsfrei auf Materialfehler überprüft werden, bspw. mittels Wirbelstromprüfung, Ultraschall oder Röntgen.

In Figur 2 nicht dargestellt sind anschließende Prozesse mittels derer das Metall-Hohlprofil in Teilstücke geschnitten wird oder eine Ummantelung des Metall-Hohlprofils mit einer Isolier- oder Schutzschicht erfolgt.

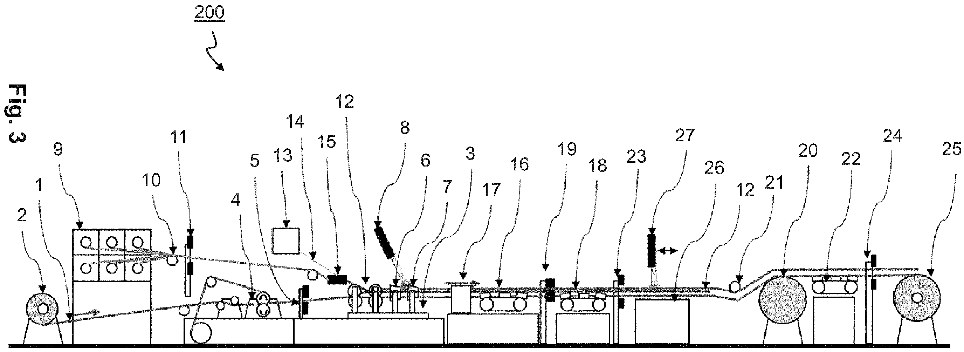

Figur 3 zeigt ein exemplarisches Beispiel einer erfindungsgemäßen Vorrichtung 200 zur kontinuierlichen Herstellung von perforierten Metall-Hohlprofilen mit einem oder mehreren darin gelagerten Faserleitern. Von einem Wickel oder Abwickler 2 wird ein dünnes Metallband 1 abgewickelt, bspw. ein Band aus Edelstahl. Das Metallband 1 wird einem Roll-Formwerkzeug 3, 7 zugeführt, mittels dessen es in die Form des gewünschten Metall-Hohlprofils gebracht wird, bspw. zu einem längsgeschlitzten Rundrohr geformt wird. Zwischen dem Wickel oder Abwickler 2 und dem Roll-Formwerkzeug 3, 7 kann eine Schneidvorrichtung 4 vorgesehen sein, welche das Metallband 1 auf eine benötigte Breite zuschneidet bzw. eine oder beide Kanten des Metallbandes 1 zuschneidet, um saubere und glatte Kanten zu erhalten. Zur Aufnahme abgeschnittener Teile des Metallbandes 1 kann eine Aufnahmevorrichtung vorgesehen sein. Die Breite des zugeschnittenen Metallbandes 1 kann in einer Bandbreiten-Messvorrichtung überprüft werden. Die Messergebnisse können der Schneideeinrichtung 4 zur Regelung zugeführt sein. Außerdem kann zwischen dem Wickel oder Abwickler 2 und dem Roll-Formwerkzeug 3, 7 eine Messvorrichtung zur Ermittlung der Zugkraft angeordnet sein, deren Messwerte bspw. zur Regelung von Antrieben der Vorrichtung 200 verwendet werden können. Eine Messvorrichtung 5 zur Überwachung der Bandgeschwindigkeit bzw. der Länge des zugeführten Metallbands kann ebenfalls vorgesehen sein. Vor dem Schließen des Metall-Hohlprofils werden von einer Zuführvorrichtung 9 ein oder mehrere Faserleiter sowie von einer Gelfülleinrichtung 13 ein Füllgel zugeführt, in welchem der oder die in dem Metall-Hohlprofil aufgenommenen Faserleiter gelagert sind. Die Faserleiter können in einer Faserführung 10 geführt sein, welche ein Verschlingen der Fasern verhindert. Das Füllgel kann über einen Füllschlauch 14 einem Füllkopf 15 zugeführt sein, der mit einem Führungs- oder Schutzrohr 12 verbunden ist, durch das auch der oder die Faserleiter in das Metall-Hohlprofil eingeführt werden. Die Länge der pro Zeiteinheit zugeführten Faserleiter kann in einer ersten Messeinrichtung 11 überwacht werden. Die Gelfülleinrichtung kann zur Erfassung der pro Zeiteinheit zugeführten Menge Füllgels eingerichtet sein, bspw. mittels eines Durchflussmessers. Die nach dem Formen des Metall-Hohlprofils aneinander liegenden Kanten des Bandes können mit einem oder mehreren Führungselementen 6 vor einer Laser-Schweißvorrichtung 8 so geführt werden, dass ein Verdrehen des Metall-Hohlprofils vor dem Schweißen verhindert wird und der Durchlaufabstand unterhalb einer Optik der Laser-Schweißvorrichtung 8 eingehalten wird. Die Führungselemente 6 können ein oder mehrere Finpassscheiben oder Führungsschwerter und ein oder mehrere an das den äußeren Leiter bildende Metall-Hohlprofil angepasste Führungsbuchsen umfassen. Die Geometrie des zu verschweißenden Metall-Hohlprofils wird mittels Ziehsteinen, Schließringen, Seitenrollenstufen oder Führungsbuchsen 7 geschlossen, so dass die Kanten des zu dem Metall-Hohlprofil umgeformten Metallbandes 1 im Bereich der Laser-Schweißvorrichtung 8 aneinander anliegen. Der Schweißbereich kann über eine in der Figur nicht dargestellte Schutzgasvorrichtung mit einem Schutzgas, bspw. Argon, abgedeckt werden, um Reaktionen des Schweißgutes mit der Atmosphäre zu unterbinden. Der Vorschub des verschweißten Metall-Hohlprofils erfolgt mittels einer Vorschubeinrichtung 16. Die Vorschubeinrichtung 16 kann bspw. einen oder mehrere Spannzangenabzüge, Stollenabzüge oder Bandabzüge umfassen, oder Kombinationen davon.

Das aus dem Schweißbereich abgezogene Metall-Hohlprofil kann mittels einer Kühlvorrichtung 17 auf eine Temperatur gekühlt werden, bei der die Viskosität des Füllgels einen vorgegebenen Wert nicht überschreitet und/oder die Gefahr eines Anhaftens des Metall-Hohlprofils an nachfolgenden Führungs-, Vorschub- und/oder Umformeinrichtungen verringert.

Mittels einer weiteren Vorschubeinrichtung 18 und Ziehsteinhalterungen 19 werden die Abmessungen des Metall-Hohlprofils auf ein gewünschtes Endmaß verkleinert, bevor von einer Laserbohrvorrichtung 27 eine Wand des Metall-Hohlprofils perforiert wird.

Bei der erfindungsgemäßen Vorrichtung 200 ist das Führungs- oder Schutzrohr 12 über das der oder die Faserleiter in das Metall-Hohlprofil eingebracht werden in Abzugsrichtung des Metall-Hohlprofils bis hinter die Bohrvorrichtung 27 geführt, so dass der oder die Faserleiter erst nach Einbringen der Perforierung frei innerhalb des Metall-Hohlprofils liegen. Dadurch kann eine Beschädigung des oder der Faserleiter bzw. deren Kunststoffummantelung durch beim Bohren in das Metall-Hohlprofil eindringendes Material oder die zum Bohren verwendete Laserstrahlung verhindert werden. Die Bohrvorrichtung 27 oder eine Optik der Bohrvorrichtung kann auf einer beweglichen Führung 26 angeordnet sein, so dass die Bohrvorrichtung oder deren Optik der Bewegung des durchlaufenden Metall-Hohlprofils folgen kann und eine Relativbewegung kompensiert werden kann.

Auf das perforierte Metall-Hohlprofil kann mittels eines Scheibenabzugs 20 eine Zugkraft das Metall-Hohlprofil ausgeübt werden, die eine elastische Streckung bewirkt. Das elastisch gestreckte Metall-Hohlprofil kann mehrfach um den Scheibenabzug 20 geführt sein, wobei die Temperatur zur Abgangsseite weiter abnimmt, und die Viskosität des Füllgels zunimmt. Vor dem Einbringen der Zugkraft kann von einer Temperaturmessvorrichtung die Temperatur des Metallhohlprofils berührungslos ermittelt werden, die der Kühlvorrichtung 17 als Regelgröße zugeführt wird. Weitere Temperaturmessungen können in Fertigungsrichtung hinter dem Schweißbereich, hinter der Kühlvorrichtung 17, hinter den Ziehsteinen 19 und 23 und/oder hinter einer weiteren Vorschubeinrichtung 22, welche das Metall-Hohlprofil auf dem Scheibenabzug hält, angeordnet sein. Von dem Scheibenabzug 20 wird das Metall-Hohlprofil weitgehend zugspannungsfrei einem Aufwickler 25 zugeführt. Dabei wird mit einer zweiten Messvorrichtung 24 die pro Zeiteinheit aufgenommene Länge des Erzeugnisses berührungslos bestimmt. Durch das Wegfallen der Zugspannung ist die elastische Streckung aufgehoben und der oder die Faserleiter sind von dem Füllgel aufgrund der nunmehr höheren Viskosität bei dem Zusammenziehen des Metall-Hohlprofils wellenförmig gestaucht, so dass bezogen auf die Länge des von dem Aufwickler aufgenommenen Metall-Hohlprofils eine größere Länge des oder der Faserleiter aufgenommen ist. Eine in der Figur nicht dargestellte Steuereinrichtung ermittelt laufend eine aktuelle Überlänge der Faserleiter aus der Differenz der Längenmessungen der ersten und der zweiten Messvorrichtung 11 bzw. 24. Außerdem werden momentane Prozessparameter bzw. Führungsgrößen wie bspw. Zuführgeschwindigkeit des Metallbandes, Laserleistung, Geltemperatur, Geldurchfluss, Vorschubgeschwindigkeit, Zugkraft und Rohraußentemperatur aufgenommen, und daraus zur automatischen Regelung der Überlänge Stellwerte für die Laserleistung, Geltemperatur, Vorschubgeschwindigkeit, Kühlleistung und/oder Zugkraft bestimmt.

Figur 4 zeigt unterschiedliche beispielhafte Anordnungen der Führungs- und Schutzrohre bei der Anwendung des erfindungsgemäßen Verfahrens bzw. in einer erfindungsgemäßen Vorrichtung.

In Figur 4 a) wird ein Faserleiter F in einem Führungs- oder Schutzrohr 12 in ein Metall-Hohlprofil H eingeführt. Dabei verläuft das Führungs- oder Schutzrohr 12 unter einer Laser-Schweißvorrichtung 8 bis hinter eine Bohrvorrichtung 27 in das von der Bohrvorrichtung perforierte Metall-Hohlprofil hinein. Zwischen der Laser-Schweißvorrichtung 8 und der Bohrvorrichtung 27 findet eine Verringerung des Außendurchmessers des Metall-Hohlprofils H statt. Der Pfeil auf der rechten Seite der Figur deutet die Abzugsrichtung des Metall-Hohlprofils an.

Figur 4 b) stellt eine ähnliche Anordnung wie Figur 4 a) dar. Zusätzlich wird hier jedoch ein Füllgel in das Metall-Hohlprofil H eingebracht. Das Füllgel kann beispielsweise über ein das Führungs- oder Schutzrohr 12 umgebendes weiteres Rohr 12' bis hinter die Bohrvorrichtung 27 geleitet werden, bevor es in das Metall-Hohlprofil H gelangt.

Figur 4 c) stellt eine Variante der Anordnung aus Figur 4 b) dar, bei der das Füllgel bereits nach der Verringerung des Außendurchmessers des Metall-Hohlprofils H aber vor der Bohrvorrichtung 27 in das Metall-Hohlprofil gelangt. Das das Führungs- oder Schutzrohr 12 umgebende weitere Rohr 12' endet hierbei entsprechend vorher.

Bei allen in der Figur 4 dargestellten Anordnungen kann das Führungs- oder Schutzrohr 12 sowie ggf. das das Führungs- oder Schutzrohr 12 umgebende weitere Rohr 12' nach und nach entgegen die Abzugsrichtung aus dem Metall-Hohlprofil herausgezogen werden, bis der Faserleiter frei unter der Bohrvorrichtung 27 liegt, und die Herstellung unterbrochen werden muss.

Figur 5 zeigt eine stark vereinfachte Darstellung der Lagerung eines Faserleiters 502 in einem Füllgel 504 im Inneren eines elastisch gestreckten und eines längsspannungsfreien Metall-Hohlprofils 500. Die Darstellungen in Figur 5 sind nicht maßstabsgetreu.

In Figur 5 a) wird eine Zugspannung auf das Metall-Hohlprofil 500 ausgeübt, angedeutet durch die voneinander fort weisenden Pfeile an den Enden des dargestellten Teilstücks, die das Metall-Hohlprofil 500 elastisch strecken. Es sei angenommen, dass sich das Metall-Hohlprofil 500 nur in der Länge streckt und keine Veränderung des Durchmessers erfolgt. Das Metall-Hohlprofil 500 ist nicht vollständig mit dem Füllgel 504 ausgefüllt, vielmehr verbleibt ein Freiraum 506 an der Oberseite. Der Faserleiter 502 ist in das Füllgel spannungsfrei eingebettet. Vor dem Entfernen der Zugspannung wird die Temperatur der Anordnung abgesenkt, so dass die Viskosität des Füllgels 504 ansteigt. Die steigende Viskosität erhöht die Reibung zwischen der Innenseite des Metall-Hohlprofils 500 und dem Füllgel 504 sowie die Reibung zwischen dem Füllgel 504 und dem Faserleiter 502.

In Figur 5 b) wird keine Zugspannung mehr auf das Metall-Hohlprofil 500 ausgeübt. Die aufgrund der Abkühlung erhöhte Viskosität des Füllgels 504 hat einen Teil der longitudinalen Schrumpfbewegung des Metall-Hohlprofils 500 auf den Faserleiter 502 übertragen, so dass eine in Längsrichtung des Faserleiters 502 wirkende Kraft wirkt, die den Faserleiter stauchen würde. Die Kraft ist in der Figur durch die aufeinander weisenden Pfeile dargestellt. Der Faserleiter 502 kann diese Kraft nicht aufnehmen, sondern weicht in seitliche Richtung aus, so dass sich eine wellenförmige Stauchung ergibt. Durch die wellenförmige Stauchung ist pro Längenabschnitt des Metall-Hohlprofils 500 eine größere Länge des Faserleiters 502 in dem Metall-Hohlprofil gelagert, als es der spannungsfreien Länge des Metall-Hohlprofils 500 entsprechen würde. Aufgrund der Verkleinerung des Volumens füllt das Füllgel 504 nunmehr das Metall-Hohlprofil 500 vollständig aus. Der Faserleiter 502 ist dabei bis auf kleinere Biegemomente spannungsfrei und kann sich bei einer Dehnung des Metall-Hohlprofils 500 wieder strecken, bspw. aufgrund einer Erwärmung.

**Bezugszeichenliste**

| | | | |
|---|---|---|---|
| R | Rohrsegment | 26 | bewegliche Führung |
| L | Rundloch / elliptisches Loch | 27 | Bohrvorrichtung |
| D1, D2 | Durchmesser | 100 | Verfahren |
| F | Faserleiter | 102 | Metallband zuführen |
| H | Hohlprofil | 104 | Zugkraft bestimmen |
| 1 | Metallband | 106 | Kanten beschneiden |
| 2 | Coil / Abwickler | 108 | Hohlprofil formen |
| 3 | Formwerkzeug | 109 | Faserleiter/Füllgel zuführen |
| 4 | Schneideeinrichtung | 110 | Verschweißen |
| 5 | Messvorrichtung | 110a | Temperaturprofil bestimmen |
| 6 | Führungselemente | | |
| 7 | Schließsteine/Buchsen | 110b | Abmessungen bestimmen |
| 8 | Laser-Schweißvorrichtung | 111 | Abmessung verringern |
| 9 | Faserabwickler | 112 | Hohlprofil perforieren |
| 10 | Faserführung | 114 | Temperatur bestimmen |
| 11 | erste Messeinrichtung | 116 | Temperatur einstellen |
| 12, 12' | Führungs-/Schutzrohr | 118 | Qualität bestimmen |
| 13 | Gelfülleinrichtung | 120 | elastische Streckung |
| 14 | Füllschlauch | 121 | Zugkraft überwachen |
| 15 | Füllkopf | 122 | Abkühlen |
| 16 | Vorschubeinrichtung | 123 | aufgenommene Länge messen |
| 17 | Rohrkühlung | | |
| 18 | Vorschubeinrichtung | 124 | in Aufnahmeeinrichtung aufnehmen |
| 19 | Ziehsteinhalterungen | | |
| 20 | Scheibenabzug | 126 | Bestimmung der Überlänge |
| 21 | Kraftmesseinrichtung | | |
| 22 | Vorschubeinrichtung | 128 | Regelgröße(n) aufnehmen |
| 23 | Ziehsteinhalterungen | 130 | Stellgröße(n) bestimmen |
| 24 | zweite Messeinrichtung | 200 | Vorrichtung |
| 25 | Aufwickler | | |

## Patentansprüche

1. Verfahren (100) zur kontinuierlichen Herstellung eines dünnwandigen, perforierten Metall-Hohlprofils (H) mit einem oder mehreren darin gelagerten optischen Faserleiter (F) oder optischen Faserleitern (F) umfassend:
- Zuführen (102) eines flachen Metallbandes (1) mit einer ersten Zuführgeschwindigkeit zu einer Umformvorrichtung (3, 7),
- kontinuierliches Umformen (108) des zugeführten flachen Metallbandes (1) in ein Metall-Hohlprofil (H) mit einem in Längsrichtung verlaufenden Schlitz, wobei zwei gegenüberliegende Kanten des zu dem Metall-Hohlprofil umgeformten Metallbandes (1) in einem sich in Längsrichtung des Metall-Hohlprofils erstreckenden Kontaktbereich bündig aneinander anliegen und kontinuierlich in einer Schweißvorrichtung (8) miteinander verschweißt werden (110),
- Abziehen des verschweißten Metall-Hohlprofils aus dem Schweißbereich,
**dadurch gekennzeichnet, dass** das Verfahren außerdem umfasst:
- Perforieren (112) des verschweißten Metall-Hohlprofils mittels einer in Abzugsrichtung hinter der Schweißvorrichtung (8) an einer Perforationsstelle angeordneten Bohrvorrichtung (27),
- Positionieren eines unter dem Schweißbereich hindurch verlaufenden und in Abzugsrichtung bis hinter die Perforationsstelle in das verschweißte und perforierte Metall-Hohlprofil reichenden Führungs- oder Schutzrohrs (12),
- Zuführen (109) eines optischen Faserleiters oder mehrerer optischer Faserleiter von einem Faserabwickler (9) oder mehreren Faserabwicklern (9) über das Führungs- oder Schutzrohr (12), so dass der optische oder die optischen Faserleiter in Abzugsrichtung hinter der Perforationsstelle aus dem Führungs- oder Schutzrohr (12) austritt oder austreten und in das verschweißte und perforierte Metall-Hohlprofil eingebracht wird oder werden, und
- Aufnehmen (124) des verschweißten und perforierten Metall-Hohlprofils mit dem bzw. der darin gelagerten optischen Faserleiter bzw. Faserleitern in einer Aufnahmeeinrichtung (25).

2. Verfahren (100) nach Anspruch 1, außerdem umfassend:
- Reduzieren (111) der Querschnitts-Abmessungen des verschweißten Metall-Hohlprofils vor dem Perforieren (112) auf ein gewünschtes Endmaß.

3. Verfahren (100) nach Anspruch 1 oder 2, wobei das Führungs- oder Schutzrohr (12) um eine bestimmte erste Länge über die Perforationsstelle hinaus in das Metall-Hohlprofil hineinragt und nach einer festgelegten Anzahl Bohrungen um eine bestimmte zweite Länge aus dem Metall-Hohlprofil herausgezogen und/oder um einen festgelegten Winkel axial gedreht wird.

4. Verfahren (100) nach Anspruch 1, 2 oder 3, wobei das Perforieren (112) das Bohren von Löchern in eine Wand des Metall-Hohlprofils mittels eines Lasers umfasst.

5. Verfahren (100) nach einem der Ansprüche 1 - 4, außerdem umfassend:
- Einbringen eines Füllgels zum Einbetten des optischen Faserleiters oder der optischen Faserleiter innerhalb des Metall-Hohlprofils in das Füllgel.

6. Verfahren (100) nach einem der Ansprüche 1 - 5, wobei der optische oder die optischen Faserleiter mit einer Überlänge in das perforierte Metall-Hohlprofil eingebracht werden, außerdem umfassend:
- elastisches Strecken (120) des perforierten Metall-Hohlprofils durch Einbringen einer Zugkraft auf das perforierte Metall-Hohlprofil,
- Einbringen (109) des optischen Faserleiters oder der optischen Faserleiter und ggf. des Füllgels in das gestreckte Metall-Hohlprofil, und
- Aufheben der elastischen Streckung nach dem Einbringen (109) des optischen Faserleiters oder der optischen Faserleiter und vor dem Aufnehmen (124) in der Aufnahmeeinrichtung (25).

7. Verfahren (100) nach Anspruch 6, außerdem umfassend:
- kontinuierliches Bestimmen der Länge des ungestreckt zugeführten optischen Faserleiters oder der Längen der ungestreckt zugeführten optischen Faserleiter und des nach dem Aufheben der elastischen Streckung abgeführten Metall-Hohlprofils mit dem oder den darin eingebrachten optischen Faserleiter oder optischen Faserleitern, und
- Bestimmen (128, 130) von Steuer- bzw. Regelgrößen zur Steuerung von einem oder mehreren Prozessparametern aus der nicht abgeschlossenen Liste umfassend Geschwindigkeit der Bandzuführung, Leistung der Schweißvorrichtung, Temperatur und Durchflussmenge des Füllgels pro Zeiteinheit, Vorschubgeschwindigkeit nach dem Schweißen, Zugkraft für die elastische Streckung, um eine Überlänge des oder der in dem Metall-Hohlprofil aufgenommenen optischen Faserleiters oder optischen Faserleiter einzustellen

8. Verfahren (100) nach einem oder mehreren der vorhergehenden Ansprüche, wobei das Verschweißen (110) mittels einer Laserschweißvorrichtung erfolgt.

9. Vorrichtung (200) zur kontinuierlichen Herstellung von dünnwandigen, perforierten Metall-Hohlprofilen (H) mit einem oder mehreren darin gelagerten optischen Faserleiter (F) oder optischen Faserleitern (F), umfassend:
- eine zum Zuführen eines flachen Metallbandes (1) eingerichtete Zuführeinrichtung (2),
- eine Umformvorrichtung (3, 7), welche das flache Metallband (1) so in das Metall-Hohlprofil und um den oder die zugeführten optischen Faserleiter herum umformt, dass die gegenüberliegenden Kanten des flachen Metallbandes bündig stumpf aneinanderstoßen,
- Führungsmittel (6), zwischen welchen die Kanten bündig aneinander anliegend gehalten werden,
- eine Schweißvorrichtung (8), welche die zwischen den Führungsmitteln (6) bündig aneinander liegenden Kanten miteinander verschweißt,
**dadurch gekennzeichnet, dass** die Vorrichtung (200) außerdem umfasst:
- eine in Abzugsrichtung hinter der Schweißvorrichtung (8) angeordnete Bohrvorrichtung (27) zum Perforieren des verschweißten Metall-Hohlprofils,
- eine Zuführvorrichtung mit einem Faserabwickler (9) oder mehreren Faserabwicklern (9) von welchem oder welchen ein optischer oder mehrere optische Faserleiter abgewickelt und über ein Führungs- oder Schutzrohr (12) unter der Schweißvorrichtung (8) und der Bohrvorrichtung (27) hindurch in das verschweißte und perforierte Metall-Hohlprofil eingebracht wird oder werden, wobei das Führungs- oder Schutzrohr unter dem Schweißbereich hindurch verläuft und bis hinter die Bohrvorrichtung in das verschweißte und perforierte Metall-Hohlprofil reicht, und
- eine Aufnahmeeinrichtung (25), die das verschweißte und perforierte Metall-Hohlprofil mit dem oder den darin eingebetteten optischen Faserleiter bzw. optischen Faserleitern aufnimmt.

10. Vorrichtung (200) nach Anspruch 9, außerdem umfassend:
- eine zwischen der Schweißvorrichtung (8) und der Bohrvorrichtung (27) angeordnete Vorrichtung (19) zum Reduzieren der Querschnitts-Abmessungen des verschweißten Metall-Hohlprofils.

11. Vorrichtung (200) nach Anspruch 9 oder 10, wobei das Führungs- oder Schutzrohr axial verschiebbar und/oder drehbar gelagert ist, und mittels eines Antriebs nach einer festgelegten Anzahl von Bohrungen um einen bestimmten Winkel gedreht und/oder um eine bestimmte Distanz aus dem Metall-Hohlprofil herausziehbar ist.

12. Vorrichtung (200) nach Anspruch 9, 10 oder 11, wobei das Material des Führungs- oder Schutzrohres bei der Wellenlänge eines zum Perforieren benutzten Lasers der Bohrvorrichtung eine geringere Energieabsorption bzw. eine größere Reflexion aufweist als das Material des Metall-Hohlprofils.

13. Vorrichtung (200) nach einem der Ansprüche 9 - 12, außerdem umfassend:
- eine Gelfülleinrichtung (13), von welcher über einen von einer Auslassöffnung für den oder die optischen Faserleiter beabstandeten Ringspalt ein Füllgel in das verschweißte Metall-Hohlprofil einbringbar ist.

14. Vorrichtung (200) nach Anspruch 13, wobei die Gelfülleinrichtung einen beheizbaren Vorratstank, einen beheizbaren Füllschlauch (14) und/oder einen beheizbaren Füllkopf (15) aufweist.

15. Vorrichtung (200) nach einem oder mehreren der Ansprüche 9 - 14, außerdem umfassend:
- eine Vorrichtung zur elastischen Streckung des perforierten Metall-Hohlprofils, wobei der optische oder die optischen Faserleiter ungestreckt in das gestreckte Metall-Hohlprofil eingebracht werden, und wobei die elastische Streckung aufgehoben wird bevor das Metall-Hohlprofil der Aufnahmeeinrichtung (25) zugeführt wird.

## Claims

1. A method (100) for the continuous production of a thin-walled, perforated metal hollow profile (H) with one optical fiber conductor (F) or several optical fiber conductors (F) mounted therein comprising:
- Feeding (102) a flat metal strip (1) with a first feeding speed to a forming device (3, 7),
- continuous forming (108) of the fed flat metal strip (1) into a metal hollow profile (H) with a slot running in the longitudinal direction, wherein two opposite edges of the metal strip (1) formed into the metal hollow profile abut flush against one another in a contact area extending in the longitudinal direction of the metal hollow profile and are continuously welded to one another (110) in a welding device (8),
- taking off the welded metal hollow profile from the welding area,
**characterized in that** the method also comprises:
- perforating (112) the welded metal hollow profile by means of drilling device (27) arranged in the take-off direction downstream of the welding device (8) at a perforation point,
- positioning a guide or protective tube (12) running under the welding area and extending into the welded and perforated metal hollow profile in the take-off direction to behind of the perforation point,
- feeding (109) an optical fiber conductor or several optical fiber conductors from a fiber unwinder (9) or several fiber unwinders (9) via the guide or protective tube (12), so that the optical fiber conductor or the optical fiber conductors exits or exit from the guide or protective tube (12) in the take-off direction behind the perforation point and is or are introduced into the welded and perforated metal hollow profile, and
- receiving (124) the welded and perforated metal hollow profile with the optical fiber conductor or fiber conductors mounted therein in a receiving device (25).

2. The method (100) according to claim 1, also comprising:
- reducing (111) the cross-section dimensions of the welded metal hollow profile before perforating (112) to a desired final dimension.

3. The method (100) according to claim 1 or 2, wherein the guide or protective tube (12) protrudes by a certain first length behind the perforation point into the metal hollow profile and is pulled out from the metal hollow profile by a certain second length and/or rotated axially by a defined angle.

4. The method (100) according to claim 1, 2 or 3, wherein the perforation (112) comprises the drilling of holes into a wall of the metal hollow profile by means of a laser.

5. The method (100) according to any one of claims 1-4, also comprising:
- introducing a filling gel for embedding the optical fiber conductor or the optical fiber conductors within the metal hollow profile into the filling gel.

6. The method (100) according to any one of claims 1-5, wherein the optical fiber conductor or the optical fiber conductors with an overlength are introduced into the perforated metal hollow profile, also comprising:
- elastic stretching (120) of the perforated metal hollow profile by applying a tensile force to the perforated metal hollow profile,
- introducing (109) the optical fiber conductor or the optical fiber conductors and, if necessary, the filling gel into the stretched metal hollow profile, and
- eliminating the elastic stretching after the introduction (109) of the optical fiber conductor or the optical fiber conductors and before the reception (124) in the receiving device (25).

7. The method (100) according to claim 6, also comprising:
- continuous determination of the length of the unstretched fed optical fiber conductor or the lengths of the unstretched fed optical fiber conductors and of the metal hollow profile removed after elimination of the elastic stretching with the optical fiber conductor or optical fiber conductors introduced therein, and
- determination (128, 130) of control or regulation variables for the control of one or several process parameters from the non-exhaustive list comprising speed of the strip feeding, power of the welding device, temperature and flow rate of the filling gel per time unit, feed rate after the welding, tensile force for the elastic stretching, in order to set an overlength of the optical fiber conductor or optical fiber conductors received in the metal hollow profile.

8. The method (100) according to one or several of the preceding claims, wherein the welding (110) is performed by means of a laser welding device.

9. A device (200) for the continuous production of thin-walled perforated metal hollow profiles (H) with one optical fiber conductor (F) or several optical fiber conductors (F), comprising:
- a feed device (2) configured for feeding a flat metal strip (1),
- a forming device (3, 7), which forms the flat metal strip (1) in the metal hollow profile and around the fed optical fiber conductor(s) such that the opposite edges of the flat metal strip abut bluntly against one another,
- guide means (6) between which the edges are held abutting flush against one another,
- a welding device (8), which welds together edges lying flush to one another between the guide means (6),
**characterized in that** the device (200) also comprises:
- a drilling device (27) arranged in the take-off direction downstream of the welding device (8) for perforating the welded metal hollow profile,
- a feed device with a fiber unwinder (9) or several fiber unwinders (9) from which an optical fiber conductor or several optical fiber conductors is/are unwound and is or are introduced via a guide or protective tube (12) under the welding device (8) and the drilling device (27) into the welded and perforated metal hollow profile, wherein the guide or protective tube runs under the welding area and extends into the welded and perforated metal hollow profile to behind the drilling device, and
- a receiving device (25), which receives the welded and perforated metal hollow profile with the optical fiber conductor or optical fiber conductors embedded therein.

10. The device (200) according to claim 9, also comprising:
- a device (19) arranged between the welding device (8) and the drilling device (27) for reducing the cross-section dimensions of the welded metal hollow profile.

11. The device (200) according to claim 9 or 10, wherein the guide or protective tube is axially displaceable and/or rotatably mounted, and is rotated by a certain angle by means of a drive after a defined number of bores have been drilled and/or can be pulled out from the metal hollow profile by a certain distance.

12. The device (200) according to claim 9, 10 or 11, wherein the material of the guide or protective tube has a lower energy absorption or a greater reflection than the material of the metal hollow profile at the wave length of a laser of the drilling device used for the perforation.

13. The device (200) according to any one of claims 9-12, also comprising:
- A gel filling device (13), from which a filling gel can be introduced into the welded metal hollow profile via an annular gap spaced apart from an outlet opening for the optical fiber conductor or conductors.

14. The device (200) according to claim 13, wherein the gel filling device has a heatable storage tank, a heatable filling hose (14) and/or a heatable filling head (15).

15. The device (200) according to one or several of claims 9-14, also comprising:
- A device for elastic stretching of the perforated metal hollow profile, wherein the optical fiber conductor or the optical fiber conductors are introduced unstretched into the stretched metal hollow profile, and wherein the elastic stretching is eliminated before the metal hollow profile is fed to the receiving device (25).

## Revendications

1. Procédé (100) pour la fabrication en continu d'un profilé métallique creux perforée à parois minces (H) avec une fibre optique (F) ou plusieurs fibres optiques (F) logées à l'intérieur, comprenant :
- l'introduction (102) d'une bande métallique plate (1) avec une première vitesse d'introduction dans un dispositif de façonnage (3, 7),
- façonnage en continu (108) de la bande métallique plate (1) dans un profilé métallique creux (H) avec une fente d'étendant dans la direction longitudinale, dans lequel deux arêtes opposées de la bande métallique (1) façonnée en un profilé métallique creux s'appuient l'une contre l'autre de manière affleurante dans une zone de contact s'étendant dans la direction longitudinale du profilé métallique creux et sont soudées (110) entre elles de manière continue dans un dispositif de soudage (8),
- retrait du profilé métallique creux hors de la zone de soudage,
**caractérisé en ce que** le procédé comprend en outre :
- la perforation (112) du profilé métallique creux soudé au moyen d'un dispositif de perçage (27) disposé derrière le dispositif de soudage (8) au niveau d'un endroit de perforation,
- le positionnement d'un tube de guidage ou de protection (12) s'étendant sous la zone de soudage à travers celle-ci et arrivant, dans la direction de retrait, jusque derrière l'endroit de perforation dans le profilé métallique creux soudé et perforé,
- l'introduction (109) d'une fibre optique ou de plusieurs fibres optiques à partir d'un dérouleur de fibre (9) ou de plusieurs dérouleurs de fibre (9), par l'intermédiaire du tube de guidage ou de protection (12), de sorte que la fibre optique ou les fibres optiques sorte(nt) du tube de guidage ou de protection (12) et est (sont) introduite(s) dans le profilé métallique creux soudé et perforé et
- réception (124) du profilé métallique creux soudé et perforé avec la ou les fibres optiques logées à l'intérieur dans un dispositif de réception (25).

2. Procédé (100) selon la revendication 1, comprenant en outre :
- la réduction (111) des dimensions de la section transversale du profilé métallique creux, avant la perforation (112), à une dimension finale souhaitée.

3. Procédé (100) selon la revendication 1 ou 2, dans lequel le tube de guidage ou de protection (12) dépasse, d'une première longueur déterminée, de l'endroit de perforation dans le profilé métallique creux et, après un nombre défini de perçages, est retiré, d'une deuxième longueur déterminée, hors du profilé métallique creux et/ou est tourné axialement d'un angle défini.

4. Procédé (100) selon la revendication 1, 2 ou 3, dans lequel la perforation (112) comprend le perçage de trous dans une paroi du profilé métallique creux au moyen d'un laser.

5. Procédé (100) selon l'une des revendications 1 à 4, comprenant en outre :
- l'introduction d'un gel de remplissage pour l'intégration de la fibre optique ou des fibres optiques à l'intérieur du profilé métallique creux dans le gel de remplissage.

6. Procédé selon l'une des revendications 1 à 5, dans lequel la fibre optique ou les fibres optiques sont intégrées dans le profilé métallique creux avec une sur-longueur, comprenant en outre :
- l'étirement élastique (120) du profilé métallique creux perforé par l'application d'une force de traction sur le profilé métallique creux perforé,
- introduction (109) de la fibre optique ou des fibres optiques et, le cas échéant, du gel de remplissage, dans le profilé métallique creux étiré et
- relâchement de l'étirement élastique après l'introduction (109) de la fibre optique ou des fibres optiques et avant la réception (124) dans le dispositif de réception (25).

7. Procédé (100) selon la revendication 6, comprenant en outre :
- la détermination en continu de la longueur de la fibre optique introduite sans étirement ou des longueurs des fibres optiques introduites sans étirement et du profilé métallique creux évacué après le relâchement de l'étirement élastique avec la fibre optique ou les fibres optiques intégrées à l'intérieur et
- la détermination (128, 130) de grandeurs de contrôle ou de régulation pour le contrôle d'un ou plusieurs paramètres de process, dans la liste non exhaustive constituée de la vitesse d'introduction de la bande, la puissance du dispositif de soudage, la température et le débit du gel de remplissage par unité de temps, la vitesse d'avance après le soudage, la force de traction pour l'étirement élastique, afin de régler une sur-longueur de la ou des fibres optiques logées dans le profilé métallique creux.

8. Procédé (100) selon l'une ou plusieurs des revendications précédentes, dans lequel le soudage (110) a lieu au moyen d'un dispositif de soudage au laser.

9. Dispositif (200) pour la fabrication en continu de profilés métalliques creux perforés à parois minces (H) avec une fibre optique (F) ou plusieurs fibres optiques (F) logées à l'intérieur, comprenant :
- un dispositif d'introduction (2) conçu pour l'introduction d'une bande métallique plate (1),
- un dispositif de façonnage (3, 7) qui façonne la bande métallique plate (1) en un profilé métallique creux et autour de la ou des fibres optiques introduites, de sorte que les arêtes opposées de la bande métallique plate soient reliées entre elles bout à bout de manière affleurante,
- des moyens de guidage (6) entre lesquels les arêtes sont maintenues appuyées l'une contre l'autre de manière affleurante,
- un dispositif de soudage (8) qui soude entre elles les arêtes appuyées de manière affleurante l'une contre l'autre entre les moyens de guidage (6),
**caractérisé en ce que** le dispositif (200) comprend en outre :
- un dispositif de perçage (27), disposé derrière le dispositif de soudage (8), dans une direction de retrait, pour la perforation du profilé métallique creux soudé,
- un dispositif d'introduction avec un dérouleur de fibre (9) ou plusieurs dérouleurs de fibres (9), à partir duquel ou desquels est (sont) déroulée(s) une fibre optique ou plusieurs fibres optiques et est (sont) introduite(s), par l'intermédiaire d'un tube de guidage ou de protection (12) sous le dispositif de soudage (8) et à travers le dispositif de perçage (27), dans le profilé métallique creux soudé et perforé, dans lequel le tube de guidage ou de protection s'étend à travers et sous la zone de soudage et arrive jusque derrière le dispositif de perçage dans le profilé métallique creux soudé et perforé et
- un dispositif de réception (25) qui reçoit le profilé métallique creux soudé et perforé, avec la fibre optique ou les fibres optiques intégrée(s) à l'intérieur.

10. Dispositif (200) selon la revendication 9, comprenant en outre :
- un dispositif (19), disposé entre le dispositif de soudage (8) et le dispositif de perçage (27), pour la réduction des dimensions de la section transversale du profilé métallique creux soudé.

11. Dispositif (200) selon la revendication 9 ou 10, dans lequel le tube de guidage ou de protection est logé de manière coulissante et/ou rotative axialement et est tourné d'un angle déterminé au moyen d'un dispositif d'entraînement après un nombre défini de perçages et/ou peut être retiré d'une distance déterminée hors du profilé métallique creux.

12. Dispositif (200) selon la revendication 9, 10 ou 11, dans lequel le matériau du tube de guidage ou de protection présente, pour la longueur d'onde d'un laser du dispositif de perçage utilisé pour la perforation, une absorption d'énergie plus faible ou une réflexion plus élevée que le matériau du profilé métallique creux.

13. Dispositif (200) selon l'une des revendications 9 à 12, comprenant en outre :
- un dispositif à gel de remplissage (13) qui permet d'introduire, par l'intermédiaire d'une fente annulaire distante d'une ouverture de sortie pour la ou les fibres optiques, un gel de remplissage dans le profilé métallique creux soudé.

14. Dispositif (200) selon la revendication 13, dans lequel le dispositif à gel de remplissage comprend un réservoir chauffé, un tuyau de remplissage chauffé (14) et/ou une tête de remplissage chauffée (15).

15. Dispositif (200) selon l'une des revendications 9 à 14, comprenant en outre :
- un dispositif pour l'étirement élastique du profilé métallique creux perforé, dans lequel la fibre optique ou les fibres optiques sont introduites sans étirement dans le profilé métallique creux étiré et dans lequel l'étirement élastique est relâché avant que le profilé métallique creux soit introduit dans le dispositif de réception (25).
